# EUROPEAN PATENT APPLICATION

(11) **EP 2 950 386 A1**
(43) Date of publication of application: **02.12.2015**
(21) Application number: 15168674.8
(22) Date of filing: 16.12.2013
(51) Int. Cl.: H01Q 1/24, H01Q 1/44, H04M 1/02

(54) **COMMUNICATION ANTENNA UNIT AND MOBILE TERMINAL APPARATUS**

(30) Priority: 18.12.2012 JP 2012276226; 18.12.2012 JP 2012276227
(62) Divisional of application: 13197461.0
(71) Applicant: Panasonic Corporation, Osaka 571-8501 (JP)
(72) Inventor: Endo, Keita, Osaka, 540-6207 (JP); Kato, Teruo, Osaka, 540-6207 (JP); Kuriyama, Futoshi, Osaka, 540-6207 (JP); Sawada, Tatsuo, Osaka, 540-6207 (JP); Yasutomi, Kenya, Osaka, 540-6207 (JP); Fukao, Chizu, Osaka, 540-6207 (JP); Yoshida, Kotaro, Osaka, 540-6207 (JP); Imano, Daigo, Osaka, 540-6207 (JP)
(74) Representative: Eisenführ Speiser

(57) **Abstract**

A mobile terminal apparatus (10) comprising: a casing (11) that includes an accommodation portion (38) which a battery pack (14) is attachable to and detachable from; a battery pack (14) that is accommodated in the casing (11), a circuit board (13) that is accommodated in the casing (11); a power reception portion (16) that is held in the casing (11); a power feeding portion (18) that is provided in the battery pack (14) and connected to the power reception portion (16); a plurality of terminal plates (44), each having one end to be held on one surface which is included in the power reception portion (16), and having two widest surfaces which are parallel to each other, one of which facing and being parallel to one of two widest surfaces of an adjacent terminal plate (44), wherein the plurality of terminal plates are aligned along a direction orthogonal to those two widest surfaces; a flexible circuit board (21) that includes a flexible bendable portion (48) provided along the direction in which the plurality of terminal plates (44) are aligned and connects the circuit board to the power reception portion (18).

## Description

### BACKGROUND

### 1. Technical Field

The present invention relates to a communication antenna unit that includes a communication antenna that utilizes a circuit board and a human body sensor, and relates to a mobile terminal apparatus, that includes such communication antenna, in which a battery pack is accommodated adjacent to the circuit board inside a casing and a power feeding portion of the battery pack is connected to a power reception portion inside the casing.

### 2. Background Art

In outdoor operations such as deliveries and payments by door-to-door parcel delivery service, warehousing management and insurance sales, mobile terminal apparatuses are used in many cases in order to deal with various types of data.

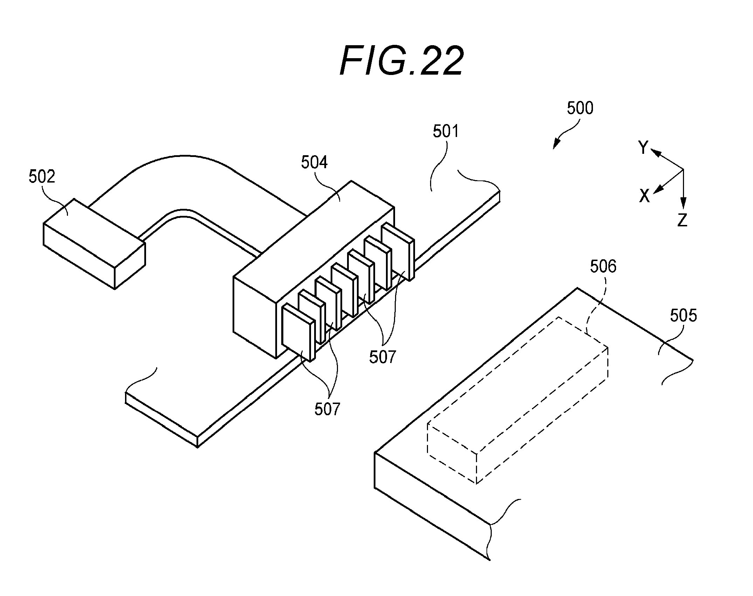

As illustrated in Fig. 22, in a mobile terminal apparatus 500, for example, a connector portion 502 is provided in a circuit board 501 inside a casing, and a power feeding portion 506 of a battery pack 505 is connected to a power reception portion 504 that is connected to the connector portion 502. Among the power reception portions 504, there has been known a power reception portion in which a plurality of power reception terminals 507 are formed in a band form. In the power reception portion 504, each of the power reception terminals 507 is aligned at a predetermined interval along a mutual thickness direction (see JP-A-2008-97961).

In recent years, the mobile terminal apparatus 500 has been required for improvement in drop durability and shock resistance. However, in the related art, if a shock greater than an anticipated shock is applied to the casing, vibration of a power reception portion are transferred to a connector portion. Therefore, there is a possibility that damage such as a separation from a circuit board may occur in the circuit board and the connector portion.

Moreover, when the mobile terminal apparatus 500 is used in outdoor operations, there occurs a case where a battery in a battery pack is in an empty state during the operations. In that case, there is a need to replace the battery pack. In addition, it is required that the mobile terminal apparatus 500 used in the outdoor operations has water resistance and dust resistance compared to a case of being used indoors, thereby being required for studies to improve the water resistance and the dust resistance.

In addition, in the above mobile terminal apparatuses for outdoor operations, for example, for a case of processing a payment, in order to transmit payment data to a payment process center, there are provided a data communication module such as Second Generation (2G), Third Generation (3G) and Long Term Evolution (LTE); a communication antenna that is connected thereto and the like.

In the data communication modules, there is a data communication module compatible with multiple telecommunication standards, for example, compatible with both 2G and 3G. In addition, as for LTE, for example, there is a data communication module that adopts multiple carrier frequencies under one communication standard. Therefore, the communication antenna that is connected to a communication module compatible with the multiple communication standards also needs to be designed in an antenna pattern compatible with the multiple communication standards or the multiple carrier frequencies.

Moreover, in mobile phones, a negative influence on the human body by electromagnetic waves generated from the communication antenna is of great concern. In that respect, there is adopted a technology to detect an approach or contact of the human body with respect to the communication antenna so as to weaken electromagnetic wave energy generated by the communication antenna (for example, refer to JP-A-2000-216610).

In JP-A-2000-216610, impedance of the communication antenna is changed when the human body approaches or comes into contact with the communication antenna, and it is detected that the electromagnetic wave energy that is supposed to be output returns to an apparatus side. In other words, this is an indirect detection method for which it is doubtful whether high detection sensitivity can be acquired with the indirect detection method. Therefore, it is more preferable to adopt a direct detection method. JP-A-9-233016 discloses a technology, for example, to directly detect the approach or contact itself of the human body with respect to the communication antenna or a radio communication apparatus on which the communication antenna is mounted.

Regarding the mobile terminal apparatuses for outdoor operations, even though the apparatus is used for only data communication, it is anticipated that the apparatus is held in the hand or is put in a holder attached to the waist or in a pocket to be carried. In that case, the approach or contact of the human body with respect to the communication antenna of a communication terminal apparatus occurs frequently. Therefore, in the mobile terminal apparatuses for outdoor operations as well, there is a need for the technology that controls communication electricity by detecting the approach or contact of the human body.

In addition to the above technology to be compatible with the multiple communication standards and the technology to control the communication electricity by detecting the approach or contact of the human body, functions to be implemented in the mobile terminal apparatus are increasing steadily. For example, when using the apparatus for an operation that requires a payment processing, a reading function for magnetic cards or contact/non-contact IC cards is necessary. In addition, when using the apparatus for deliveries in a parcel delivery service or for warehousing management, a reading function for a bar code, a QR code (registered trademark), an RF-ID Tag and the like is necessary. Therefore, a space for circuits assigned for each function is steadily reduced. The circumstance is not exceptional for a communication control circuit including the aforementioned communication antenna, the human body sensor and the battery pack including the connector portion and the power reception portion thereof.

### SUMMARY

In detecting not only a direct contact of an object such as the human body with a communication antenna of an apparatus but also an approach of an object toward the communication antenna of the apparatus, using a communication antenna of the JP-A-2000-216610 can be considered. However, it is difficult to precisely detect the approach or contact of the human body with respect to the communication antenna. In addition, a direct detection method of JP-A-9-233016, compared to a method of JP-A-2000-216610, is capable of precisely detecting the approach or contact of the human body more. However, as mentioned above, in recent mobile terminal apparatuses, many devices are mounted on the inside of a casing to attain various functions, thereby causing flexibility in disposition of the human body sensor adopted in JP-A-9-233016 to be limited. That is, a problem is to have both a precise detection of the approach or contact of the human body with respect to the communication antenna and a space-saving design for a disposition of devices in a limited space of the casing to be compatible with each other. Recently in particular, a demand level for this technology has become higher. Hitherto, it has been permissibly considered that an approach of the human body toward the communication antenna is equivalent to the approach or contact of the human body with respect to the mobile terminal apparatus. However, it has become insufficient presently, and the approach or contact of the human body with respect to the communication antenna and the vicinity thereof needs to be detected precisely. That is, a detection range is specified within the communication antenna and the vicinity thereof so as to be more particular than before. In precisely detecting the approach or contact of the human body with respect to the communication antenna itself, in order to adopt the direct detection method disclosed in JP-A-9-233016 under the limited design flexibility, for example, a configuration and disposition of the human body sensor and the communication antenna are important.

Moreover, if the communication antenna and the human body sensor are individually provided, a range needs to be secured in which the human body sensor can sufficiently detect the approach or contact of the human body with respect to the communication antenna. However, if the aforementioned components are arranged in a limited narrow space, there is a possibility that a detection range of the human body sensor may be one-sided or a sufficient detection performance cannot be acquired due to interference of the communication antenna and a communication circuit that is connected thereto.

The above-mentioned circumstance relates to mobile terminal apparatuses having both the communication antenna and the human body sensor provided therein. Meanwhile, if there is provided only the communication antenna in the mobile terminal apparatus not provided with the human body sensor, from a viewpoint of increasing the types of communication standards and carrier frequencies, there is required a further space-saving design.

The present invention provides a technology to dispose the communication antenna and the human body sensor inside the limited narrow space and to precisely detect the approach or contact of the human body with respect to the communication antenna itself. Moreover, the present invention also provides a technology to dispose only the communication antenna inside the limited narrow space. In addition, the present invention also provides a technology for a battery pack to be secured with drop durability, shock resistance, water resistance and dust resistance, while being replaceable. Accordingly, both miniaturization and functional maintenance in the mobile terminal apparatus can be achieved.

According to an aspect of the present invention, there is provided a communication antenna unit including: a communication antenna formed of a conductor pattern; a human body sensor formed of another conductor pattern separately from the communication antenna; and a single unit board on which the communication antenna and the human body sensor are formed.

According to the above configuration, it is possible to dispose the human body sensor and the communication antenna inside a limited narrow space by the single circuit board without degrading a communication performance or a performance to detect an approach or contact of the human body with respect to the communication antenna, thereby achieving both miniaturization and functional maintenance in the apparatus.

According to an aspect of the present invention, for example, the communication antenna unit further includes a first reactance element which connects the communication antenna to the human body sensor.

According to the above configuration, the human body sensor utilizes a conductor pattern of the communication antenna effectively.

According to an aspect of the present invention, for example, the communication antenna further includes: a first communication antenna that is configured by a first antenna conductor pattern formed on the unit board and adapted to transmit or receive a radio wave in a first frequency; and a second communication antenna that is configured by the first antenna conductor pattern and a second antenna conductor pattern that is formed adjacent to the first antenna conductor pattern on the circuit board and configured to transmit or receive a radio wave in a second frequency, and the first reactance element connects the first antenna conductor pattern to the human body sensor.

According to the above configuration, it is possible to provide a so-called dual antenna that transmits and receives two or more types of radio waves in which the frequencies are different from each other with a single communication antenna unit.

According to an aspect of the present invention, for example, the communication antenna unit further includes: a flat plane section; and a curved section formed adjacent to the flat plane section, wherein the communication antenna is formed in the flat plane section and the curved section, and the human body sensor is formed in the flat plane section.

According to the above configuration, the flat plane section of the flexible circuit board has a larger plane part than the curved section, and intensity of a transmission radio wave is greater as well. Therefore, there is provided the human body sensor adjacent to the flat plane section of the communication antenna of which the intensity of the transmission radio wave needs to be lowered when the human body approaches or comes into contact such that it is possible to suppress an influence of a communication electromagnetic wave on the human body while suppressing deterioration in communication quality to a minimum.

According to an aspect of the present invention, for example, the communication antenna further includes: a first communication antenna that is configured by a first antenna conductor pattern formed on the unit board and adapted to transmit or receive a radio wave in a first frequency; and a second communication antenna that is configured by the first antenna conductor pattern and a second antenna conductor pattern that is formed adjacent to the first antenna conductor pattern on the circuit board and configured to transmit or receive a radio wave in a second frequency, wherein the first reactance element connects the first antenna conductor pattern to the human body sensor, and one of the first and second communication antenna conductor patterns is at least partly formed in the curved section, and the other of the first and second communication antenna conductor patterns and the human body are formed in the flat plane section.

According to the above configuration, it is possible to dispose the dual antenna and the human body sensor through a space-saving design without degrading each of performances thereof. In the dual antenna, there is provided the human body sensor adjacent to the flat plane section of the communication antenna, of which the intensity of the transmission radio wave needs to be lowered when a human body approaches thereto or comes into contact therewith such that it is possible to suppress an influence of a communication electromagnetic wave on a human body while suppressing deterioration in communication quality to a minimum.

According to an aspect of the present invention, there is provided a mobile terminal apparatus including: a casing; and a communication antenna unit disposed in the casing, wherein the communication antenna unit includes: a communication antenna formed of a conductor pattern; a human body sensor formed of another conductor pattern separately from the communication antenna; and a single unit board on which the communication antenna and the human body sensor are formed.

According to the above configuration, it is possible to dispose the human body sensor and the communication antenna inside a limited narrow space by the single circuit board without degrading a communication performance or a performance to detect an approach or contact of the human body with respect to the communication antenna, thereby achieving both miniaturization and functional maintenance in the apparatus.

According to an aspect of the present invention, for example, the mobile terminal apparatus further includes: a display portion including a display surface on the casing, wherein a flat plane section of the communication antenna unit is arranged closer to a surface opposite to the display surface than to the display surface.

According to the above configuration, the first antenna conductor pattern (the first communication antenna) and the human body sensor are disposed on the rear surface side which is the opposite side to the front surface on which the display portion is disposed. Since the rear surface is frequently exposed to the approach and contact of a user when in use, it is possible to enhance the detection sensitivity by disposing the human body sensor close to the rear surface.

According to an aspect of the present invention, for example, the mobile terminal apparatus further includes: a first reactance element which connects the communication antenna to the human body sensor; and a capacitor which connects the communication antenna to a transmission and reception circuit accommodated in the casing.

According to the above configuration, the human body sensor utilizes a conductor pattern of the communication antenna effectively, and electric current of a direct-current component necessary for the human body sensor is secured by the capacitor such that the human body sensor functions effectively.

According to an aspect of the present invention, for example, the communication antenna is disposed at a position closer to a corner of the casing than the human body sensor is disposed.

According to the above configuration, the human body sensor can be disposed being closer to the center side being in a frequent contact with a human body than the corner portion of the casing, and thus, it is possible to improve the detection sensitivity of the human body sensor with respect to a human body.

According to an aspect of the present invention, for example, the mobile terminal apparatus further includes: a first reactance element which connects the communication antenna to the human body sensor; and a capacitor which connects the communication antenna to a transmission and reception circuit accommodated in the casing.

According to the above configuration, the first antenna conductor pattern that is disposed at the corner portion of the casing functions not only as the first communication antenna but also as a part of the human body sensor. Therefore, for example, even if the human body sensor is away from the corner portion of the casing, the approach or contact of a human body with respect to the corner portion can be precisely detected.

According to an aspect of the present invention, for example, the mobile terminal apparatus further includes a battery pack that is accommodated in the casing, wherein the human body sensor and the communication antenna are disposed on a corner portion at a side far from the battery pack in the casing.

According to the above configuration, it is possible to dispose the human body sensor and the communication antenna inside a limited narrow space by the single circuit board without degrading a communication performance or a performance to detect an approach or contact of the human body with respect to the communication antenna, thereby achieving both miniaturization and functional maintenance in the apparatus. In further consideration with the maintenance of the functions, a user holds a lower side of the housing since the lower side of the housing in which the battery pack is stored is heavier. As a result, since the communication antenna and the human body sensor are disposed separate away from the human body, the possibility of lowering the transmission power due to the absorption of the transmission and reception radio waves by the human body or the erroneous operation of the human body detection is lowered.

Moreover, an object of the present invention is to provide a mobile terminal apparatus in which even though a power reception portion vibrates in a thickness direction of a power reception terminal with respect to the casing following a battery pack that vibrates with respect to the circuit board due to a shock such as dropping, no damage to the circuit board and a connector portion occurs, and which can satisfy all of replaceability, water resistance and dust resistance of the battery pack.

Therefore, according to an aspect of the present invention, there is provided a mobile terminal apparatus including: a casing; a circuit board that is accommodated in the casing; a battery pack that is accommodated in the casing; a power reception portion that is held in the casing; a power feeding portion that is provided in the battery pack and connected to the power reception portion; a plurality of terminal plates, each having one end to be held on one surface which is included in the power reception portion, and having two widest surfaces which are parallel to each other, one of which facing and being parallel to one of two widest surfaces of an adjacent terminal plate, wherein the plurality of terminal plates are aligned along a direction orthogonal to those two widest surfaces; and a flexible circuit board that includes a flexible bendable portion provided along the direction in which the plurality of terminal plates are aligned and connects the circuit board to the power reception portion.

The power feeding portion of the battery pack is connected to the power reception portion, and the connector portion is connected to the power reception portion via the flexible circuit board. Moreover, the flexible circuit board has the bendable portion, and the bendable portion is caused to be flexible in an arrangement direction of the power reception portion and the connector portion. Accordingly, when a power reception portion vibrates in the thickness direction of the power reception terminal with respect to the casing following the battery pack that vibrates with respect to the circuit board due to the shock such as dropping, it is possible to cause the bendable portion of the flexible circuit board to be bent. It is possible to absorb a vibration of the power reception portion by flexing the bendable portion. Accordingly, the vibration of the power reception portion is not transferred to the connector portion so as to be able to prevent damage to the connector portion or a fall-out from the board from occurring such that it is possible to prevent the power supply from being cut. Particularly, in a case where the mobile terminal apparatus in the aspects of the present invention is used to handle important data such as payments and deliveries in sales activities, warehousing management operations and the like, the cut of power supply when processing information thereof or temporarily holding the data leads to a crucial loss or disruption of the data. According to the configuration of the present invention, the crucial loss or disruption of the data can be prevented.

According to an aspect of the present invention, for example, a U-shaped portion is provided between the power reception portion and the bendable portion of the flexible board, and the U-shaped portion has a U shape when viewed from a direction orthogonal to a wiring surface of the flexible board and protrudes toward an opposite side of the power reception portion with respect to the bendable portion in a direction parallel to the wiring surface of the flexible circuit board and the two widest surfaces of the plurality of terminal plates.

Accordingly, it is possible to further enhance an ability to absorb a shock transmitted through the battery pack due to dropping or the like of the mobile terminal apparatus.

According to an aspect of the present invention, there is provided a mobile terminal apparatus including: a casing; a battery pack that is accommodated in the casing; an accommodation portion which the battery pack is attachable to and detachable from; a power reception portion that is held in the casing; and a power feeding portion that is provided in the battery pack and detachably connected to the power reception portion, wherein the battery pack includes a first waterproof member, and the power reception portion and the power feeding portion are disposed in an inner side of the accommodation portion than the first waterproof member of the battery pack in a state where the battery pack is accommodated in the accommodation portion.

Accordingly, the power reception portion and the power feeding portion of the battery pack are free from being exposed to the liquid or dust from an external portion such that the battery pack is replaceable and can secure water resistance and dust resistance.

According to an aspect of the present invention, for example, the mobile terminal apparatus further includes: a recess portion that is provided outside the accommodation portion for the battery pack in the casing; a lid portion that closes the recess portion; and a hole portion that is provided on a bottom surface of the recess portion, and is covered with a water stopper which disallows a liquid passing through from an external portion into an internal portion of the casing, and allows air to pass through between the external portion and the internal portion of the casing.

The recess portion is provided with the hole portion, and the hole portion is covered with the water stopper that allows air to pass therethrough. Accordingly, when the casing is deformed due to an external pressure applied to the casing such that an internal space of the casing is reduced, surplus air in the internal space is discharged from the hole portion. The casing recovers an initial shape so as to cause the internal space to be restored in its original state when the external pressure against the casing is released. When the internal space is restored so as to be under a negative pressure, outside air is sucked from the hole portion into the internal space, thereby restoring an internal pressure of the internal space in its original state. Meanwhile, the water stopper covering the hole portion has a function of disallowing the liquid passing through from the external portion into the internal portion of the casing. Accordingly, when a spray of water, rainwater or the like is applied to the casing, it is possible to prevent the applied water from infiltrating the casing using the water stopper such that the water resistance of the casing can be maintained. Accordingly, the liquid or dust influenced by the negative pressure applied to the casing is prevented from intruding from a pack opening portion (accommodation portion for battery pack) that accommodates the battery pack, thereby being possible to secure tamper resistance to prevent a read-out of data by unauthorized means.

According to an aspect of the present invention, for example, the mobile terminal apparatus further includes: a through hole that is provided on the bottom surface of the recess portion and allows an access from the external portion of the casing to the circuit board; and a frame-shaped second waterproof member that surrounds the through hole and is disposed between the bottom surface of the recess portion and a rear surface of the lid portion to be in close contact therewith, wherein the hole portion is provided outside the second waterproof member in the bottom surface of the recess portion.

Accordingly, it is possible to prevent the liquid and dust from intruding not only from the accommodation portion of the battery pack but also from the through hole. Then, it is possible to secure water resistance, dust resistance and tamper resistance, and to attach or enable a desired module while being free from an influence of the negative pressure.

According to aspects of the present invention, in a mobile terminal apparatus, it is possible to dispose the human body sensor and a communication antenna inside a limited narrow space by the single circuit board without degrading a communication performance or a performance to detect an approach or contact of the human body with respect to the communication antenna. In addition, according to the aspect of the present invention, a vibration of a power reception portion is absorbed by flexing the bendable portion so as not to transfer the vibration of the power reception portion to a connector portion such that it is possible to prevent damage to the connector portion. Therefore, it is possible to achieve both miniaturization and functional maintenance in the mobile terminal apparatus.

### BRIEF DESCRIPTION OF THE DRAWINGS

Fig. 1 is a perspective view illustrating a mobile terminal apparatus according to a first embodiment of the present invention which is viewed from a front surface side thereof.
Fig. 2 is a perspective view illustrating the mobile terminal apparatus of Fig. 1 which is viewed from a rear surface side thereof.
Fig. 3 is an exploded perspective view illustrating a divided state of a casing included in the mobile terminal apparatus of Fig. 2.
Fig. 4 is an exploded perspective view illustrating a state where a cover is removed from the mobile terminal apparatus of Fig. 3.
Fig. 5 is a plan view illustrating a state where a lid portion is detached from the mobile terminal apparatus according to the first embodiment.
Fig. 6 is a cross-sectional view illustrating the mobile terminal apparatus of Fig. 5 in a cutaway state.
Fig. 7 is an enlarged view of an I-section of Fig. 3.
Fig. 8 is a side view illustrating a power reception portion, a flexible circuit board and the like of Fig. 7 which are viewed in an arrow II direction.
Fig. 9 is a perspective view illustrating the mobile terminal apparatus according to the first embodiment before a desired module is attached.
Fig. 10 is a perspective view illustrating the mobile terminal apparatus according to the first embodiment after the desired module is attached.
Fig. 11 is a perspective view illustrating a flexible circuit board according to a second embodiment of the present invention.
Fig. 12 is a perspective view illustrating a flexible circuit board according to a third embodiment of the present invention.
Fig. 13 is a perspective view of a communication antenna unit according to a fourth embodiment of the present invention.
Fig. 14 is a side view of the communication antenna unit of Fig. 13 which is viewed in an arrow A direction.
Fig. 15 is an expanded plan view of the flexible circuit board according to the fourth embodiment.
Fig. 16 is a schematic view of an electric circuit of the communication antenna unit according to the fourth embodiment.
Fig. 17A is a side view of the mobile terminal apparatus of which disposition state of the communication antenna unit is visualized according to the fourth embodiment.
Fig. 17B is a side view of the mobile terminal apparatus according to the fourth embodiment in which the communication antenna unit is in a reversed disposition from Fig. 17A.
Fig. 18 is an expanded plan view of a flexible circuit board according to a fifth embodiment.
Fig. 19 is an expanded plan view of a flexible circuit board according to a sixth embodiment.
Fig. 20 is an expanded plan view of a flexible circuit board according to a seventh embodiment.
Fig. 21 is an expanded plan view of a flexible circuit board according to a modified example of the seventh embodiment.
Fig. 22 illustrates an example of a contact configuration between a battery pack and a circuit board in the related art.

### DETAILED DESCRIPTION

Hereinafter, mobile terminal apparatuses according to embodiments of the present invention will be described with reference to drawings. In each of the drawings, an X-axis indicates a transverse direction, an E1-E2 direction and an A-direction of a casing 11. A Y-axis indicates a longitudinal direction, a vertical direction and a B-direction of the casing 11. A positive direction of a Z-axis indicates a front surface 11A of the casing 11, and a negative direction of the Z-axis indicates a rear surface 11B of the casing 11.

### (First Embodiment)

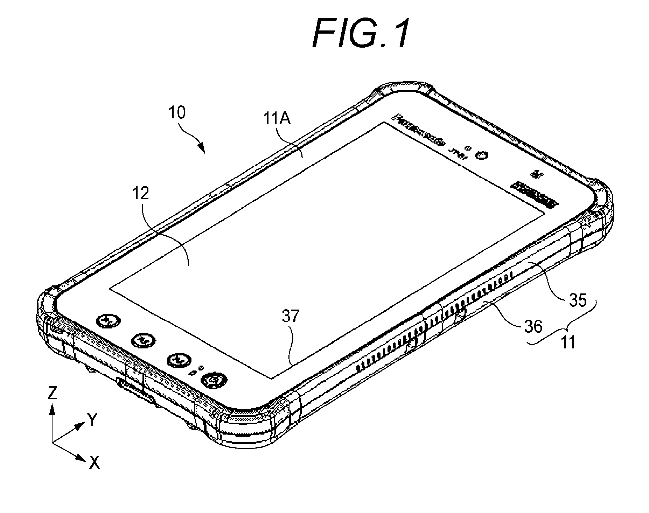

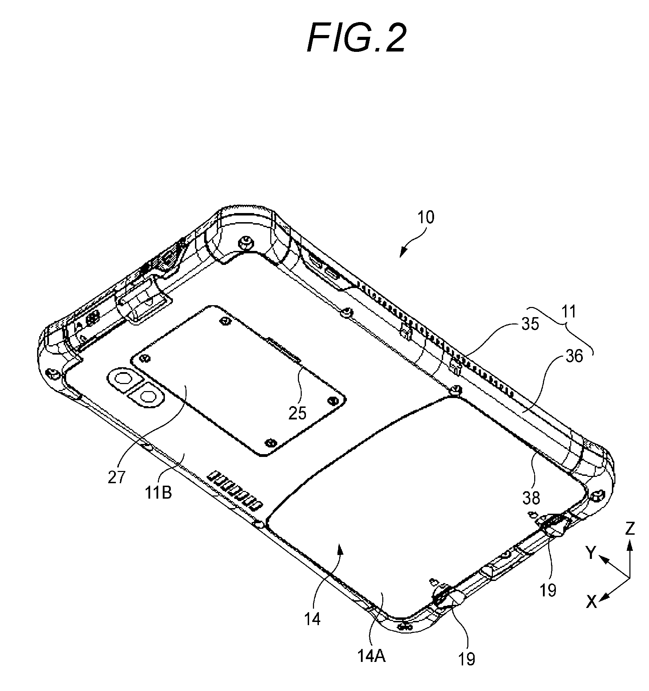

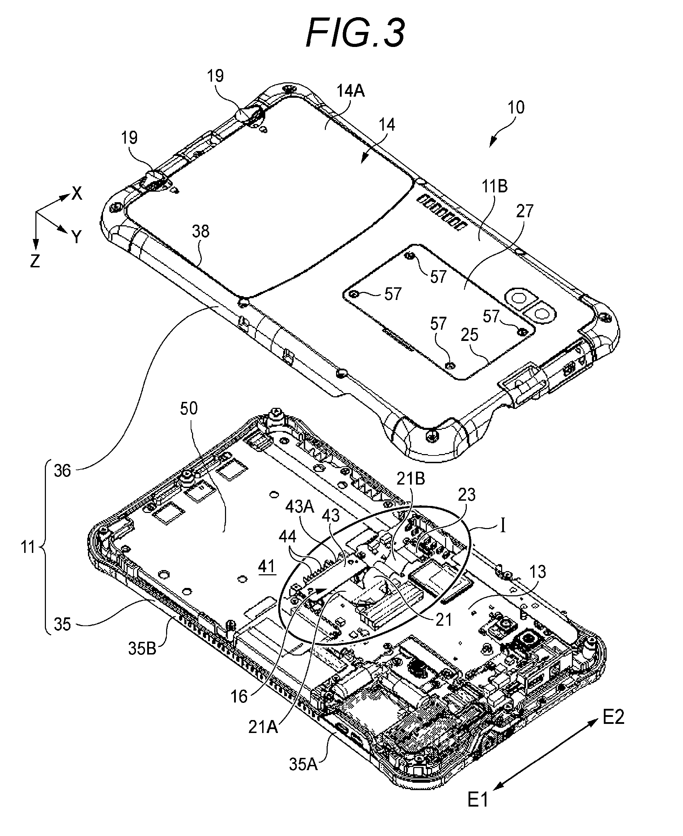

As illustrated in Figs. 1 and 2, a mobile terminal apparatus 10 includes a substantially rectangular body-shaped casing 11, a display portion 12 that is provided on a front surface 11A of the casing 11, a circuit board 13 (refer to Fig. 3) that is accommodated in the casing 11 and a battery pack 14 that is accommodated in the casing 11.

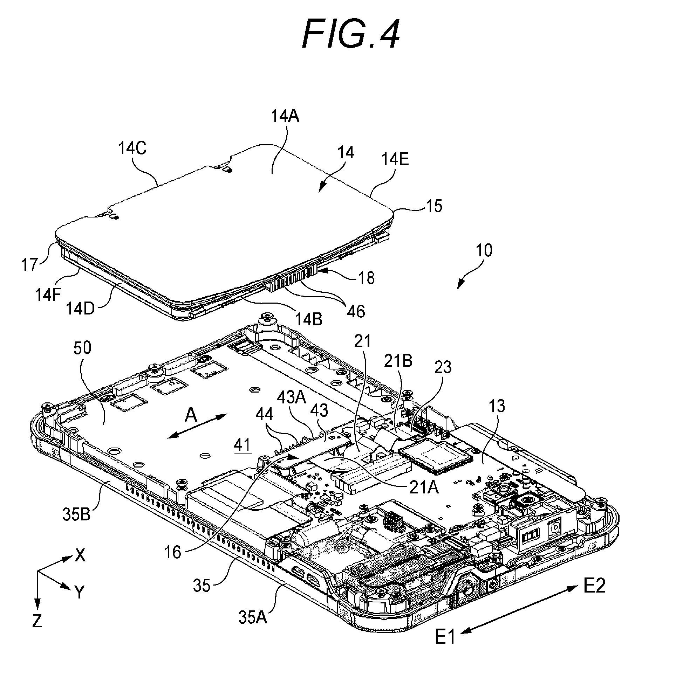

Moreover, as illustrated in Figs. 3 and 4, the mobile terminal apparatus 10 includes a power reception portion 16 that is held in the casing 11, a power feeding portion 18 that is provided in the battery pack 14, a flexible circuit board 21 of which one end portion 21A is connected to the power feeding portion 18, and a connector portion 23 that is connected to the other end portion 21B of the flexible circuit board 21. In addition, the mobile terminal apparatus 10 includes a recess portion 25 that is provided on a rear surface 11B of the casing 11, and a lid portion 27 that closes the recess portion 25.

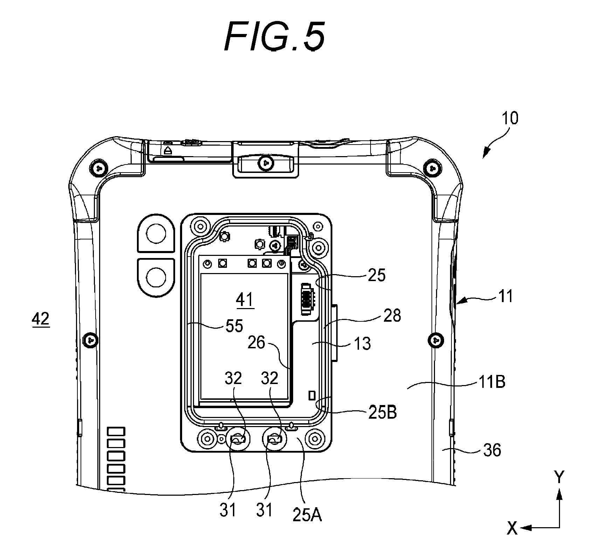

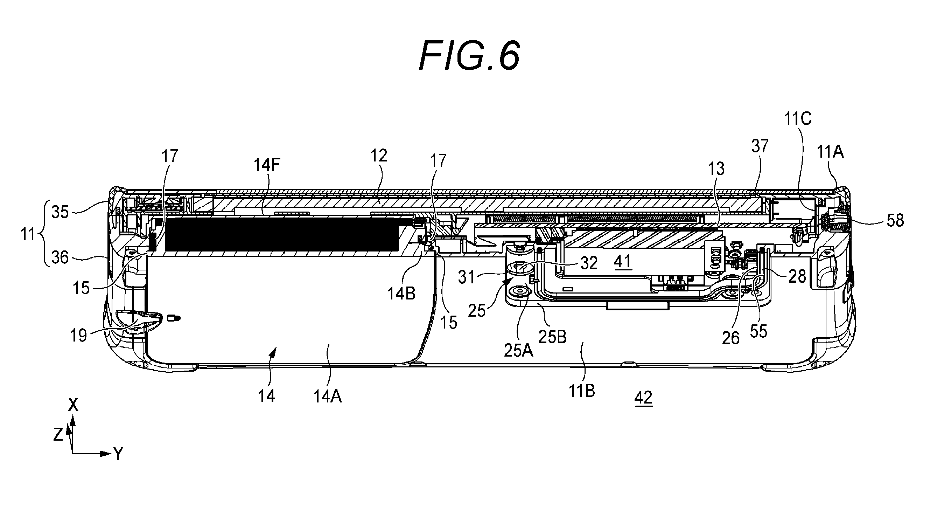

Additionally, as illustrated in Figs. 5 and 6, the mobile terminal apparatus 10 includes the recess portion 25 that is provided on the rear surface 11B of the casing 11, a through hole 26 that is provided on a bottom surface 25A of the recess portion 25, the lid portion 27 (refer to Fig. 3) that closes the recess portion 25 and a waterproof member 28 (a second waterproof member) that surrounds the through hole 26. Moreover, the mobile terminal apparatus 10 includes a hole portion 31 that is provided on the bottom surface 25A, and a water stopper 32 that covers the hole portion 31.

Returning to Figs. 1 and 2, the casing 11 includes a case 35 that has an opening portion 37 (refer to Fig. 6) that accommodates the display portion 12, and a cover 36 that is overlapped with the case 35 to form the rear surface (rear surface of casing 11) 11B at the opposite side of the display portion 12.

The opening portion 37 is formed on a front surface (that is, front surface of casing 11) 11A of the case 35. The opening portion 37 is provided with the display portion 12. A pack opening portion 38 that is formed on the rear surface 11B that is the opposite side of the display portion 12 in the casing 11, and the recess portion 25 (refer to Fig. 6) that is formed adjacent to the pack opening portion 38 are formed on the cover 36. A front surface 14A of the battery pack 14 is exposed in the pack opening portion 38, and the lid portion 27 is attached to the recess portion 25.

As illustrated in Fig. 3, the lid portion 27 is attached by a plurality of fastening screws 57 so as not to be detached easily by a user. Since the lid portion 27 is caused not to be detached easily, the mobile terminal apparatus 10 has tamper resistance to prevent a read-out of data by unauthorized tools.

As illustrated in Fig. 4, the circuit board 13 is formed in a substantially rectangular shape and provided in an upper half portion 35A of the case 35. The battery pack 14 is formed in a substantially rectangular shape in a plan view having a top edge 14B, a bottom edge 14C and a pair of lateral edges 14D and 14E. The battery pack 14 is accommodated in a lower half portion 35B of the case 35 via the pack opening portion 38 of the cover 36 to be provided adjacent to the circuit board 13. A storage portion for a cell body of the battery pack 14 is surrounded by the top edge 14B, the bottom edge 14C and the pair of lateral edges 14D and 14E. The storage portion is positioned to be interposed between the front surface 14A and a rear surface 14F at the opposite side thereof.

An area of the front surface 14A of the battery pack 14 that is viewed from the rear surface 11B side in a state where the battery pack 14 is attached to the pack opening portion 38 of the casing 11 is larger than that of the storage portion of the cell main body of the battery pack 14. In the front surface 14A of the battery pack 14, a frame-shaped waterproof member 17 (a first waterproof member) is provided on a rear side of a flange portion 15 that protrudes from a part surrounded by the top edge 14B, the bottom edge 14C and the pair of lateral edges 14D and 14E.

The frame-shaped waterproof member 17 prevents a liquid or dust from intruding into an internal portion of the pack opening portion 38 that is formed in the rear surface 11B of the casing 11. The frame-shaped waterproof member 17 is provided so as to surround the top edge 14B, the bottom edge 14C and the pair of lateral edges 14D and 14E on the rear surface of the flange portion 15 of the battery pack 14. The frame-shaped waterproof member 17 is in contact with a side wall portion of the pack opening portion 38 and receives a compressive force in a state where the battery pack 14 is attached to the pack opening portion 38 of the casing 11. Particularly, in between parts fixed by two lock mechanisms 19 that are at the lowest portion of the cover 36 of the casing 11, a width of the frame-shaped waterproof member 17 becomes wider along the bottom edge 14C of the battery pack 14 (refer to Fig. 6).

The wide-width part is exactly at the opposite side of the power feeding portion 18 that is on the top edge 14B of the battery pack 14 having the storage portion of the cell main body of the battery pack 14 which is surrounded by the top edge 14B, the bottom edge 14C and the pair of lateral edges 14D and 14E to be interposed therebetween. Since the above-described compressive force becomes particularly large at the wide-width part, a connection between the power feeding portion 18 of the battery pack 14 and the power reception portion 16 at the casing 11 side of the mobile terminal apparatus 10 becomes firmer due to a repulsive force thereof. Therefore, it is possible to prevent the power feeding portion 18 and the power reception portion 16 from being exposed to the liquid or dust.

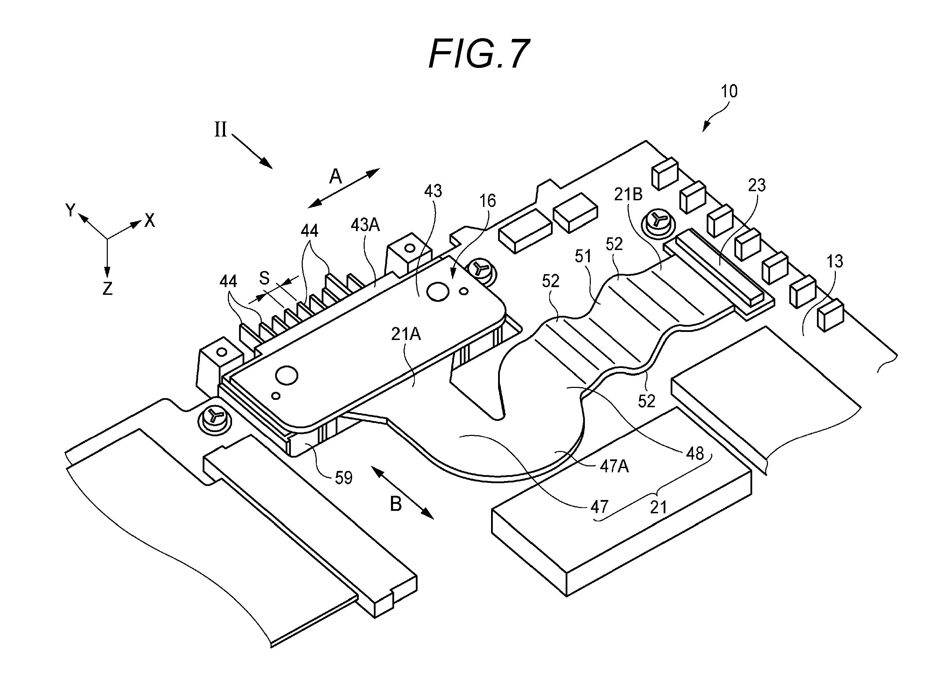

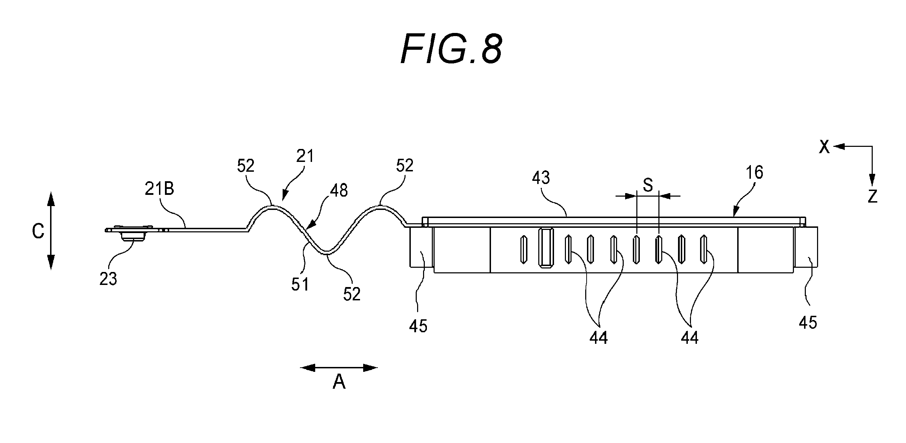

The power reception portion 16 includes a power reception case 43 that is held substantially in a center of an internal portion 41 of the casing 11, and a plurality of power reception terminals 44 (terminal plates) that are provided on a surface 43A facing the power feeding portion 18 of the power reception case 43. One end of each of the plurality of power reception terminals 44 is respectively held on one surface that is included in the power reception case 43 of the power reception portion 16. As illustrated in Figs. 6 and 7, the power reception portion 16 is disposed in a storage portion 59 that is provided on a metal frame 50 substantially in a center of the internal portion of the casing 11 in a thickness direction (Z-axis direction). Moreover, cushion members 45 (rectangular parts at both ends of power reception portion 16 in Fig. 8) are attached to both ends of the power reception portion 16 orthogonal to an arrow A direction (arrow X direction). When the power reception portion 16 is disposed in the storage portion 59, the cushion member 45 is compressed.

As illustrated in Figs. 7 and 8, the plurality of power reception terminals 44 are formed in plate shapes or belt shapes to be aligned in a comb shape along a mutual plate thickness direction (arrow A direction (arrow X direction)) of each of the power reception terminals 44 having predetermined intervals S therebetween. Moreover, the plurality of power reception terminals 44 are aligned in a surface direction of the circuit board 13, that is, along a direction parallel to a component mounting surface and orthogonal to an arrangement direction (longitudinal direction of casing 11, refer to Figs. 2 to 6) of the circuit board 13 and the battery pack 14, that is, the arrow B direction (arrow Y direction). In other words, the plurality of power reception terminals 44 are aligned so that two widest surfaces of each power reception terminal which are parallel to each other are parallel to one of two widest surfaces of an adjacent power reception terminals along a direction orthogonal to those two widest surfaces, that is, along a direction (arrow A direction, arrow X direction) in which the plurality of power reception terminals 44 are aligned.

Returning to Fig. 4, the power feeding portion 18 is provided on the top edge 14B of the battery pack 14 facing the power reception portion 16. Similar to the power reception portion 16, the power feeding portion 18 includes a plurality of power supply terminals 46 that are formed in a belt shape. The plurality of the power supply terminals 46 are arranged in a connectable manner corresponding to the power reception terminals 44.

Accordingly, the power feeding portion 18 is connected to the power reception portion 16 in a state where the battery pack 14 is accommodated in the pack opening portion 38 that is in the lower half portion 35B of the case 35 via the pack opening portion 38 of the cover 36. The battery pack 14 is fixed to the pack opening portion 38 by a connection part between the power feeding portion 18 and the power reception portion 16, and those two lock mechanisms 19 (refer to Fig. 3) that are at the lowest portion of the cover 36 of the casing 11. In this accommodated state, when viewed from the pack opening portion side, the power feeding portion 18 and the power reception portion 16 are disposed in inner side of the pack opening portion 38 than the frame-shaped waterproof member 17 (the first waterproof member) provided on the above-described rear side of the flange portion 15 on the front surface 14A of the battery pack 14, that is, on an internal portion side of the casing 11. Therefore, the power feeding portion 18 and the power reception portion 16 are free from being exposed to the liquid or dust from the external portion such that the battery pack 14 is replaceable and can secure water resistance and dust resistance.

Particularly, the above-mentioned matter is important in a case where the mobile terminal apparatus 10 according to the first embodiment is operated outside away from an office or a location of business for a long period for payments and deliveries in sales activities, warehousing management operations and the like. That is because the mobile terminal apparatus 10 is unlikely driven for a long period only with one battery pack 14. In other words, the battery pack 14 needs to be replaceable when using outside. Furthermore, in this circumstance, since the mobile terminal apparatus 10 is operated outside, it is vulnerable to rainwater or dust that rises by wind. Accordingly, in a state where the battery pack 14 is accommodated in the pack opening portion 38 of the casing 11, there is a need for the internal portion of the pack opening portion 38 having the power feeding portion 18 and the power reception portion 16 to be free from a liquid such as rainwater, dust and the like intruding thereto. In the above-described configuration according to the first embodiment, all of replaceability, water resistance and dust resistance of the battery pack 14 are satisfied.

As illustrated in Figs. 7 and 8, one end portion 21A of the flexible circuit board 21 is connected to the power reception portion 16, and the other end portion 21B is connected to the connector portion 23. The flexible circuit board 21 has a first board portion 47 that is bent in a U shape from the power reception portion 16 in a longitudinal direction of the casing 11, and a second board portion 48 that extends from an end portion 47A of the first board portion 47 to the connector portion 23 in a transverse direction of the casing 11.

The second board portion 48 has a bendable portion 51 along an alignment direction (arrow A direction (arrow X direction)) of the power reception portion 16 and the connector portion 23. The bendable portion 51 is formed in a bellows shape by having a plurality of waving portions 52 in which a predetermined position of the second board portion 48 waves along a thickness direction (arrow C direction (arrow Z direction)) of the flexible circuit board 21. That is, the flexible circuit board 21 has the flexible bendable portion 51 along a direction (arrow A direction, arrow X direction) in which a plurality of power reception terminals 44 of the power reception portion 16 are aligned.

In the first embodiment, an example is described regarding the plurality of waving portions 52 as the bendable portion 51 to be included. However, without being limited thereto, it is possible to include one waving portion 52 as the bendable portion 51.

As the second board portion 48 has the bendable portion 51, it is possible to bend the bendable portion 51 along the alignment direction (arrow A direction (arrow X direction)) of the power reception portion 16 and the connector portion 23. In addition, as the bendable portion 51 is formed to wave along the thickness direction (arrow C direction (arrow Z direction) illustrated in Fig. 8) of the flexible circuit board 21, it is possible to reduce an occupancy space of the bendable portion 51 in the internal portion 41 of the casing 11 compared to a case where the bendable portion 51 is in a bent shape or is formed to protrude parallel to the component mounting surface of the circuit board 13.

The connector portion 23 is provided in the circuit board 13 and connected to the power reception portion 16 via the flexible circuit board 21. The connector portion 23 is parallel to the component mounting surface of the circuit board 13 with respect to the power reception portion 16 and arranged along a direction parallel to the alignment direction (arrow A direction (arrow X direction)) of each power reception terminal 44.

Here, as illustrated in Fig. 4, a case will be described in which the mobile terminal apparatus 10 is dropped or the like in a state where the power feeding portion 18 of the battery pack 14 is connected to the power reception portion 16. It can be assumed that the battery pack 14 vibrates with respect to the circuit board 13 due to a shock such as dropping the mobile terminal apparatus 10, the power reception portion 16 vibrates in a plate thickness direction (arrow A direction (arrow X direction)) of the power reception terminals 44 with respect to the casing 11 following a battery pack 14.

Therefore, as illustrated in Figs. 7 and 8, the bendable portion 51 is provided in the flexible circuit board 21 that connects the power reception portion 16 and the connector portion 23 to each other. The bendable portion 51 is caused to be flexible along an arrangement direction of the power reception portion 16 and the connector portion 23.

Accordingly, when the power reception portion 16 vibrates in the plate thickness direction (arrow A direction (arrow X direction)) of the power reception terminals 44 following the battery pack 14 due to a shock such as dropping, it is possible to cause the bendable portion of the flexible circuit board 21 to be bent. The bendable portion 51 bends to absorb a vibration of the power reception portion 16 in the arrow A direction (arrow X direction) so as not to transfer the vibration of the power reception portion 16 to the connector portion 23. Accordingly, it is possible to prevent a fall-out of the connector portion 23 from the circuit board 13 due to a shock such as dropping of the mobile terminal apparatus 10.

In addition, the power reception portion 16 is not directly connected to the circuit board 13 by direct mounting thereon but is indirectly connected thereto via the flexible circuit board 21 and the connector portion 23. Therefore, it is possible to prevent damage to the circuit board 13 itself due to a shock such as dropping that is transmitted to the power reception portion 16.

Moreover, as described above, the cushion members 45 (rectangular parts at both ends of power reception portion 16 in Fig. 8) are attached to both ends of the power reception portion 16 orthogonal to the arrow A direction (arrow X direction). When the power reception portion 16 is disposed in the storage portion 59, the cushion member 45 is compressed. Accordingly, a vibration transmitted to the battery pack 14 in the plate thickness direction (arrow A direction (arrow X direction)) of the power reception terminal 44 of the power reception portion 16 due to a shock by dropping or the like of the mobile terminal apparatus 10 is relaxed. In this manner as well, it is possible not to transfer the vibration of the power reception portion 16 to the connector portion 23, thereby enabling the connector portion 23 to be prevented from falling out from the board.

In addition, each of the plate-shaped power reception terminals 44 included in the power reception portion 16 is formed in belt shapes to be aligned in a comb shape along the mutual plate thickness direction (arrow A direction (arrow X direction)) of each of the power reception terminals 44 having predetermined intervals S therebetween. Moreover, each of the plate-shaped power reception terminals 44 is aligned along a direction parallel to the component mounting surface of the circuit board 13 and orthogonal to the arrangement direction (arrow B direction (arrow Y direction)) of the circuit board 13 and the battery pack 14. With respect to the direction parallel to the component mounting surface of the circuit board 13 and orthogonal to the arrangement direction (arrow B direction (arrow Y direction)) of the circuit board 13 and the battery pack 14, each of the plate-shaped power reception terminals 44 has a wider area than the plate thickness direction (arrow A direction (arrow X direction)) thereof. Each of the plate-shaped power reception terminals 44 has a wider area than the plate thickness direction (arrow A direction (arrow X direction)) thereof with respect to a thickness direction of the circuit board 13, that is, the thickness direction of the flexible circuit board 21 (arrow C direction (arrow Z direction) illustrated in Fig. 8) as well.

Accordingly, even though the battery pack 14 vibrates in the arrow B direction (arrow Y direction) or the thickness direction (arrow C direction (arrow Z direction) in Fig. 8) of the circuit board 13 due to a shock such as dropping or the like of the mobile terminal apparatus 10, it is no longer a disadvantage. A contact area between the power reception portion 16 that has the plurality of plate-shaped power reception terminals 44 and the power feeding portion 18 of the battery pack in the aforementioned directions is wider than the plate thickness direction (arrow A direction (arrow X direction)) of each power reception terminal 44. Even though relative positions of the power reception portion 16 and the power feeding portion 18 of the battery pack 14 are changed within a certain movable range due to a shock such as dropping or the like of the mobile terminal apparatus 10, a contact state is maintained between each of the plate-shaped power reception terminals 44 included in the power reception portion 16 and the power feeding portion 18 of the battery pack 14.

Moreover, the flexible circuit board 21 has the first board portion 47 that is bent in a U shape from the power reception portion 16 along the longitudinal direction of the casing 11. When the battery pack 14 vibrates to the above-described arrow B direction (arrow Y direction) or the thickness direction (arrow C direction (arrow Z direction) in Fig. 8) of the circuit board 13, there is a possibility that the relative positions of the power reception portion 16 and the connector portion 23 may be changed. Regarding the vibration of the battery pack 14 to the plate thickness direction (arrow A direction (arrow X direction)) of each of the power reception terminals 44, it is possible to be absorbed by the bendable portion 51 provided in the above-described second board portion 48. However, regarding other vibrations in the arrow B direction (arrow Y direction) or the thickness direction (arrow C direction (arrow Z direction) in Fig. 8) of the circuit board 13, particularly regarding the vibration of the battery pack 14 to the arrow B direction (arrow Y direction), there may be a difficult case to absorb the vibration with only the bendable portion 51.

With respect to the vibration of the battery pack 14 to the arrow B direction (arrow Y direction) or the thickness direction (arrow C direction (arrow Z direction) in Fig. 8) of the circuit board 13, a U-shaped portion or a bent portion of the flexible circuit board 21 toward the longitudinal direction of the casing 11 which is provided on a side close to the power reception portion 16 particularly, that is, provided on the first board portion 47 is effective. Here, the longitudinal direction of the casing 11 denotes an arrangement direction (arrow B direction (arrow Y direction)) of the circuit board 13 and the battery pack 14 while being parallel to the component mounting surface of the circuit board 13. In addition, the direction can be also considered as a direction that is orthogonal to the plate thickness direction (arrow A direction (arrow X direction)) of each of the plate-shaped power reception terminals 44 included in the power reception portion 16 and parallel to the component mounting surface of the circuit board 13. Moreover, the above-described direction can be also considered as an extending direction of each of the plate-shaped power reception terminals 44 included in the power reception portion 16 and a direction parallel to the component mounting direction of the circuit board 13. The U-shaped portion has a U shape when viewed from a direction (arrow Z direction) orthogonal to a wiring surface of the flexible circuit board 21. The U-shaped portion protrudes toward opposite side of the power reception portion 16 with respect to the connector portion 23 and the bendable portion 51 in a direction (arrow B direction, arrow Y direction) parallel to the wiring surface of the flexible circuit board 21 and those two widest surfaces of each power reception terminal 44 (terminal plate). Accordingly, it is possible to further enhance the ability to absorb a shock transferred via the battery pack 14 caused by the dropping of the mobile terminal apparatus 10.

Regarding the remaining plate thickness direction (arrow A direction (arrow X direction)) of each power reception terminal 44, as described above, a configuration of indirect contact to the circuit board 13 via the flexible circuit board 21 and the connector portion 23 is formed, thereby reducing the influence of a shock such as dropping or the like. According to the above configuration, it is possible to prevent the power supply from being cut. Particularly, in a case where the mobile terminal apparatus 10 according to the first embodiment is used to handle important data such as payments and deliveries in sales activities, warehousing management operations and the like, the cut of the power supply when processing information thereof or temporarily holding the data leads to a crucial loss or disruption of the data. According to the configuration of the first embodiment, the crucial loss or disruption of the data can be prevented.

Moreover, as described above, in the flange portion 15 on the front surface 14A of the battery pack 14, the frame-shaped waterproof member 17 is provided to secure all of the replaceability, the water resistance and the dust resistance of the battery pack 14. The frame-shaped waterproof member 17 has a function that relaxes a shock applied to the battery pack 14 due to dropping or the like of the mobile terminal apparatus 10. That is, a shock applied to the power feeding portion 18 of the battery pack 14 and a shock applied to the power reception portion 16 on the body side of the mobile terminal apparatus 10 connected to the power feeding portion 18 are relaxed. Accordingly, in the mobile terminal apparatus 10 of the first embodiment, it is possible to improve shock resistance while satisfying all of the replaceability, the water resistance and the dust resistance of the battery pack 14.

Next, with reference to Figs. 5, 6, 9 and 10, a water resistant function included in the mobile terminal apparatus 10 will be described. As illustrated in Figs. 5 and 6, the recess portion 25 is provided adjacent to the pack opening portion 38 (refer to Fig. 3) in the rear surface (rear surface of casing 11) 11B of the cover 36. The recess portion 25 is formed in a substantially rectangular shape, and the bottom surface 25A is formed on an inner side of the casing 11 further than the cover 36 along a periphery wall 25B.

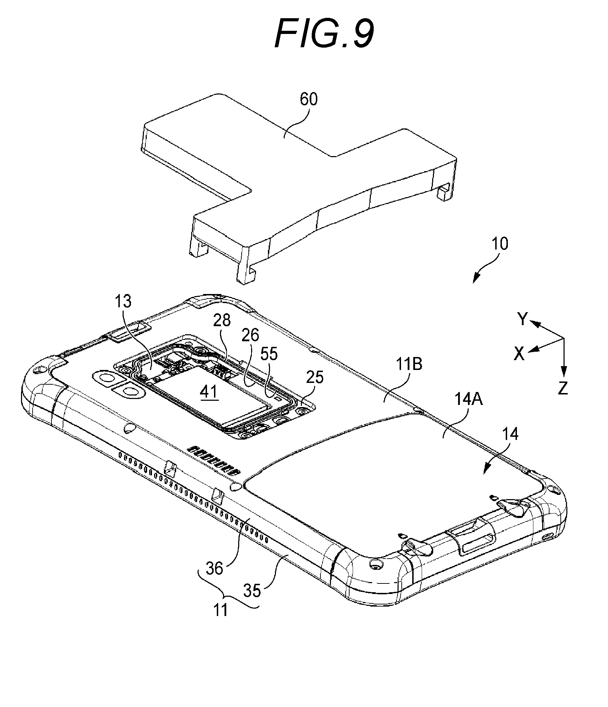

The through hole 26 is provided on the bottom surface 25A. The internal portion 41 and the external portion 42 of the casing 11 are communicating with each other via the through hole 26 provided on the bottom surface 25A. The through hole 26 is a gadget attachment portion to attach a desired module (gadget) 60 (refer to Fig. 9). The module 60 is electrically connected to the circuit board 13 in the internal portion of the casing 11 and other circuit boards (not illustrated). That is, the through hole 26 enables an access from an external portion of the casing 11 to the circuit board 13 and other circuit boards.

In the bottom surface 25A, a groove portion 55 is formed in a frame shape so as to surround the through hole 26. A frame-shaped waterproof member 28 (a second waterproof member) is accommodated in the groove portion 55, thereby surrounding the through hole 26 with the waterproof member 28. If the recess portion 25 is closed with the lid portion 27 (refer to Fig. 3), the frame-shaped waterproof member 28 is disposed between the bottom surface 25A of the recess portion 25 and the rear surface of the lid portion 27 so as to be in close contact with both thereof. Accordingly, the recess portion 25 is closed with the lid portion 27, and the through hole 26 is closed with the lid portion 27 and the waterproof member 28.

In addition, the hole portion 31 is provided outside the waterproof member 28 on the bottom surface 25A of the recess portion 25. The hole portion 31 is formed in a circle shape and covered with the water stopper 32. In the bottom surface 25A of the recess portion 25, the hole portion 31 is on an outer side further than the waterproof member 28 (the second waterproof member) that is accommodated in the groove portion 55 surrounding the through hole 26, and the hole portion 31 is on an inner side further than an outside periphery of the recess portion 25 that is covered with the lid portion 27 when the recess portion 25 is closed with the lid portion 27 (refer to Fig. 3).

The water stopper 32 has a function that disallows the liquid passing through from the external portion 42 into the internal portion 41 of the casing 11 and allows air to pass through between the internal portion 41 and the external portion 42 of the casing 11. As the water stopper 32, for example, Gore-Tex (product name, and registered trademark) is adopted. Gore-Tex is manufactured by compounding a stretched polytetrafluoroethylene film and polyurethane polymer.

In this manner, when the casing 11 is deformed due to an external pressure applied to the casing 11 such that a space of the internal portion 41 of the casing 11 is reduced, excessive air in the space of the internal portion 41 is discharged from the hole portion 31 by covering the hole portion 31 with the water stopper 32 that allows air to pass through. The casing 11 recovers an initial shape so as to cause the space of the internal portion 41 to be restored to its original state by releasing the external pressure against the casing 11. The space of the internal portion 41 is restored so as to be under a negative pressure causing outside air to be sucked from the hole portion 31 into the space of the internal portion 41, thereby restoring an internal pressure of the space of the internal portion 41 in its original state. That is because the hole portion 31 is on an outer side further than the waterproof member 28 (the second waterproof member) that is accommodated in the groove portion 55 surrounding the through hole 26 in the bottom surface 25A of the recess portion 25.

Meanwhile, since the hole portion 31 is on an outer side further than the waterproof member 28 (the second waterproof member) that is accommodated in the groove portion 55 surrounding the through hole 26 in the bottom surface 25A of the recess portion 25, the liquid can intrude in the periphery of the hole portion 31. However, the water stopper 32 covering the hole portion 31 includes a function that disallows the liquid passing through from the external portion into the internal portion of the casing 11. Accordingly, when a spray of water, rainwater or the like is applied to the casing 11, it is possible to prevent the applied water from infiltrating the internal portion 41 of the casing 11 using the water stopper 32 such that the water resistance of the casing 11 can be maintained. In addition, the water stopper 32 covering the hole portion 31 serves to prevent the liquid or dust influenced by the negative pressure applied to the casing 11 from intruding from the pack opening portion 38 (accommodation portion of battery pack 14) that accommodates the battery pack 14.

Here, for example, as in Gore-Tex, the hole portion 31 is only covered with the water stopper 32 made of a thin resin. Since this part can be destroyed easily, there is a possibility that an unauthorized access to the circuit board 13 that is stored in the internal portion of the casing 11 may be allowed. However, as described above, in the bottom surface 25A of the recess portion 25, the hole portion 31 is on an outer side further than the waterproof member 28 (the second waterproof member) that is accommodated in the groove portion 55 surrounding the through hole 26, and the hole portion 31 is on an inner side further than an outside periphery of the recess portion 25 that is covered with the lid portion 27 when the recess portion 25 is closed with the lid portion 27 (refer to Fig. 3). As illustrated in Fig. 3, the lid portion 27 is attached with the plurality of fastening screws 57 so as not to be detached easily by a user. Since the lid portion 27 is caused not to be detached easily, the mobile terminal apparatus 10 also has the tamper resistance to prevent a read-out of data by unauthorized tools while having the water resistance and the dust resistance.

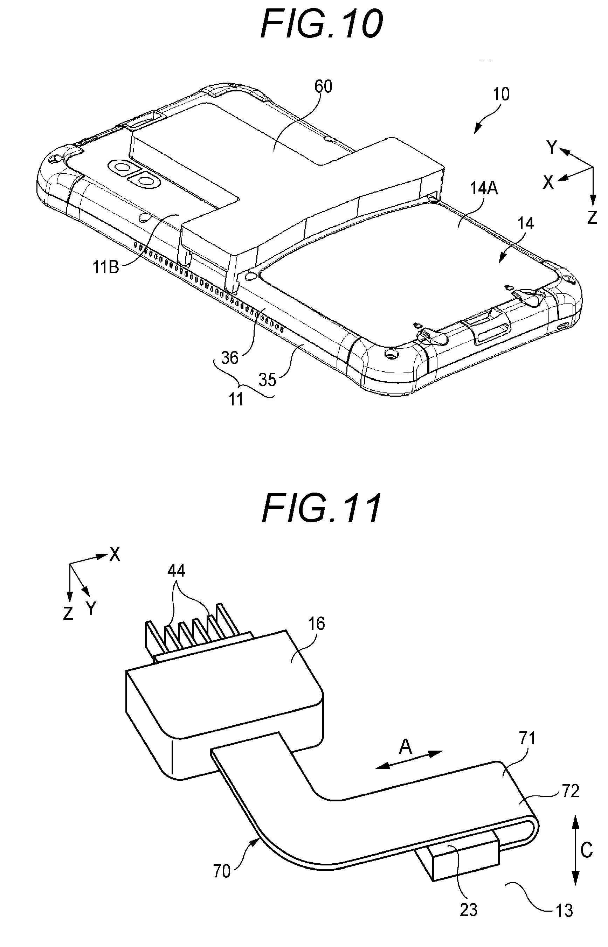

As illustrated in Figs. 9 and 10, regarding the lid portion 27 (refer to Fig. 3), in accordance with a user's need, the lid portion 27 is detached and a desired module (gadget, additional function circuit) 60 corresponding to the through hole 26 is attached as an option. As the desired module 60, for example, a card reader that reads out magnetism of a magnetic card and the like can be exemplified. Even in a case of attaching the module 60, the module 60 is attached using the plurality of fastening screws 57 so as not to be detached easily by a user. Therefore, the mobile terminal apparatus 10 also includes the tamper resistance while having the water resistance and the dust resistance.

In this manner, according to the mobile terminal apparatus 10, the desired module 60 is attachable thereto, and all of the water resistance, prevention of the negative pressure and the tamper resistance in casing 11 can be secured. That is, the liquid or dust is prevented from intruding not only into the pack opening portion 38 (accommodation portion of battery pack 14) that accommodates the battery pack 14 but also from the through hole 26. While securing the water resistance, the dust resistance and the tamper resistance and being free from the influence by the negative pressure, the desired module can be attached thereto or enabled.

In the first embodiment, an example is described regarding the waterproof member 28 (the second waterproof member) that is provided in the groove portion 55 of the bottom surface 25A. However, without being limited thereto, it is possible to provide the waterproof member 28 on the rear surface of the lid portion 27.

In addition, in the first embodiment, an example is described regarding the desired module 60 that is attached as the option corresponding to the through hole 26 which is provided on the bottom surface 25A of the recess portion 25. However, without being limited thereto, all of the water resistance, the prevention of the negative pressure and the tamper resistance in casing 11 can be secured in a case where the module 60 is not attached as an option. Even in this case, the liquid or dust influenced by the negative pressure applied to the casing 11 needs to be prevented from intruding from the pack opening portion 38 (accommodation portion of battery pack 14) that accommodates the battery pack 14, and the tamper resistance needs to be secured.

In this case, there is no need to provide a through hole 26 for attaching the module 60 on the bottom surface 25A of the recess portion 25. Therefore, there is no need to provide the frame-shaped waterproof member 28 (the second waterproof member) that surrounds the through hole 26, is disposed between the bottom surface 25A of the recess portion 25 and the rear surface of the lid portion 27, and is in close contact therewith. The casing 11 includes the recess portion 25 provided in the casing 11, the lid portion 27 closing the recess portion 25, and the hole portion 31 provided on the bottom surface 25A of the recess portion 25. The hole portion 31 is covered with the water stopper 32 that disallows the liquid passing through from the external portion into the internal portion of the casing 11 and allows air to pass through between the internal portion and the external portion of the casing 11. The recess portion 25 may be provided outside the pack opening portion 38 (accommodation portion of battery pack 14) of the battery pack 14 in the casing 11. If the recess portion 25 is inside the pack opening portion 38 of the battery pack 14, the battery pack 14 can be easily detached by a user such that the water stopper 32 is easily destroyed. In that case, read-out of data by unauthorized tools cannot be prevented. Therefore, the recess portion 25 is provided outside the pack opening portion 38 (accommodation portion of battery pack 14) of the battery pack 14 in the casing 11. In this manner, the liquid or dust influenced by the negative pressure applied to the casing 11 can be prevented from intruding from the pack opening portion 38 that accommodates the battery pack 14. Furthermore, since the lid portion 27 is attached with the plurality of fastening screws 57 so as not to be detached easily by a user, the mobile terminal apparatus 10 also includes the tamper resistance to prevent the read-out of data by unauthorized means.

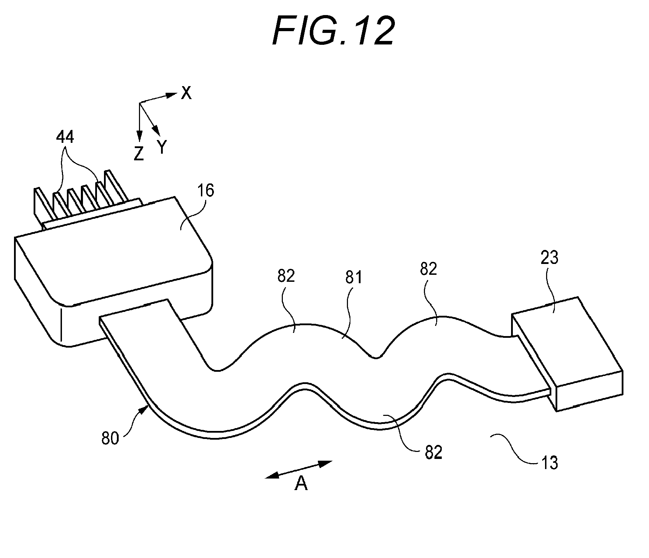

Next, a second embodiment and a third embodiment will be described with reference to Figs. 11 and 12. In the second embodiment and the third embodiment, members same as or similar to those in the flexible circuit board 21 of the first embodiment will be numbered with the same reference numeral and a description thereof will not be repeated.

### (Second Embodiment)

As illustrated in Fig. 11, a flexible circuit board 70 according to the second embodiment has a bendable portion 71 that is a replacement of the bendable portion 51 of the first embodiment, and other configurations are the same as in the flexible circuit board 21 of the first embodiment.

The bendable portion 71 has a portion 72 of which a predetermined position of the flexible circuit board 70 is bent along a thickness direction (arrow C direction (arrow Z direction)). Since the flexible circuit board 70 has the bendable portion 71, the bendable portion 71 can be bent along the arrangement direction (arrow A direction (arrow X direction)) of the power reception portion 16 and the connector portion 23.

### (Third Embodiment)

As illustrated in Fig. 12, a flexible circuit board 80 according to the third embodiment has a bendable portion 81 that is a replacement of the bendable portion 51 of the first embodiment, and other configurations are the same as the flexible circuit board 21 of the first embodiment.

The bendable portion 81 has a plurality of portions 82 of which a predetermined position of the flexible circuit board 80 waves in parallel to the component mounting surface of the circuit board 13, thereby forming a bellows shape.

Since the flexible circuit board 80 has the bendable portion 81, the bendable portion 81 can be bent along the arrangement direction (arrow A direction (arrow X direction)) of the power reception portion 16 and the connector portion 23. In addition, as the bendable portion 81 is formed to wave along a surface direction of the circuit board 13, it is possible to reduce an occupancy space of the internal portion 41 of the casing 11 (refer to Fig. 1).

### (Fourth Embodiment)

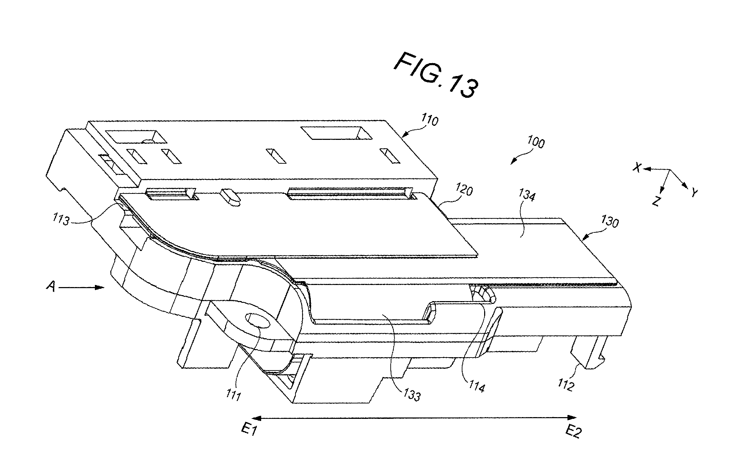

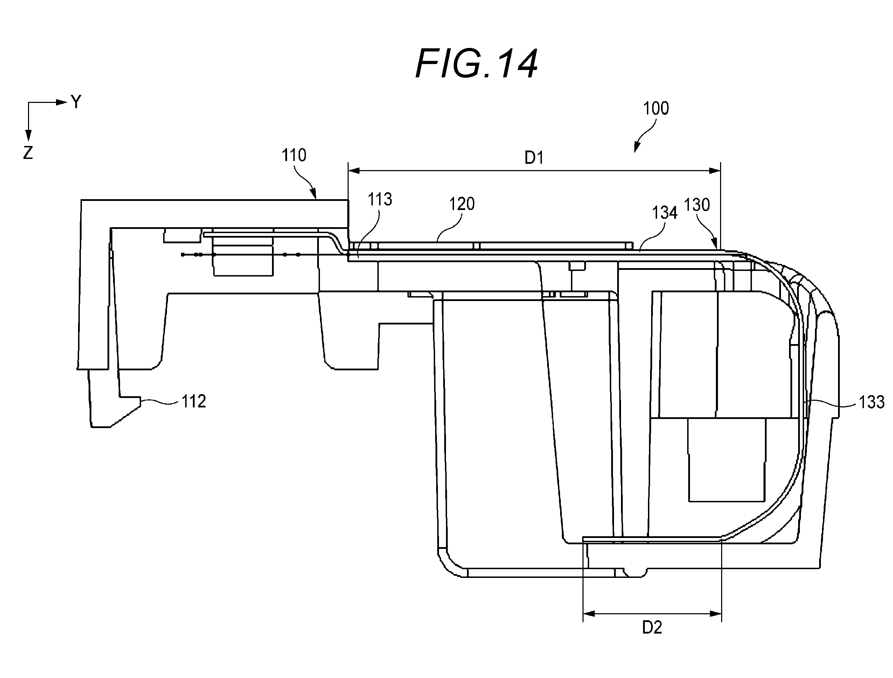

Fig. 13 illustrates a perspective view of a communication antenna unit 100 according to a fourth embodiment, and Fig. 14 illustrates a cross-sectional view of a side surface of the communication antenna unit 100 viewed from the arrow A direction of Fig. 13. As illustrated in Figs. 3 and 4, the communication antenna unit 100 is an internal portion of the casing 11 and is particularly stored in a corner portion of the casing 11. The corner portion is a side of the arrow E1 illustrated in Figs. 3 and 4.

The communication antenna unit 100 illustrated in Fig. 13 includes a support member 110 made of a resin and a flexible circuit board 130. The support member 110 is attachable to the casing 11 (refer to Figs. 3 and 4) by inserting a screw (not illustrated) through an attachment hole 111 thereof and an engagement claw 112. The support member 110 is capable of supporting the flexible circuit board 130 in a state of being held in a bent state. The support member 110 can be molded by injection molding of a resin. However, a material or shape thereof is not particularly limited.

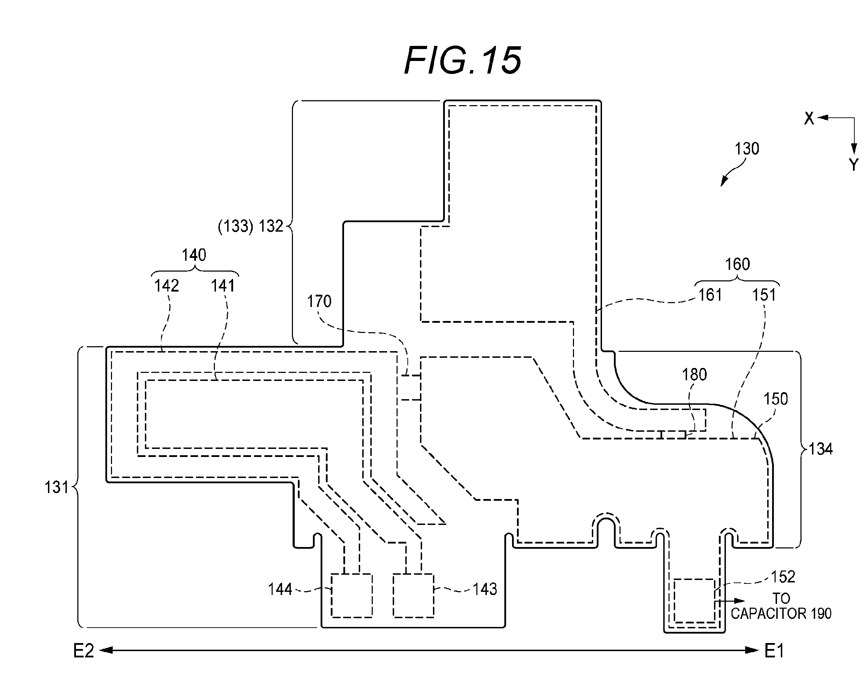

The flexible circuit board 130 includes an ordinary flexible circuit board having flexibility. As long as a conductor pattern can be formed thereon, it is not particularly limited in type. The flexible circuit board 130 illustrated in Fig. 15 includes a main section 131 and a protrusion section 132 in a plan view. The main section 131 is disposed on a flat portion 113 (refer to Figs. 13 and 14) of the support member 110. The protrusion portion 132 is inserted through a support slot 114 (refer to Figs. 13 and 14) of the support member 110 and held in a bent state. The protrusion section 132 configures a curved section 133 (also refer to Figs. 13 and 14) held in a bent state. The curved section 133 exhibits a cross sectional U shape as illustrated in Fig. 14. Meanwhile, the main section 131 illustrated in Fig. 15 is disposed in the flat portion 113 (refer to Figs. 13 and 14) of the support member 110 and configures a flat plane section 134 (also refer to Figs. 13 and 14) adjacent to the curved section 133. For having the flexibility, the flexible circuit board 130 can be easily bent by hand or the like.

Moreover, in the flexible circuit board 130, a reinforcement plate 120 made of the resin is attached. Although the reinforcement plate 120 covers a portion of the flat plane section 134 of the flexible circuit board 130 and serves to protect the flexible circuit board 130, presence or absence of a ground connection, a material, a shape, disposition place and the like are arbitrary matters in design. However, if the flexible circuit board 130 is attached to the support member 110, the curved section 133 of the flexible circuit board 130 is in a bent state such that stress is applied also to the flat portion 113 to cause the flat portion 113 to be in a bent state. The reinforcement plate 120 exhibits an effect to maintain flatness of the flat portion 113 against the stress that causes the flat portion 113 to be in a bent state.

Fig. 15 is an expanded plan view of the flexible circuit board 130. In a single flexible circuit board 130, the communication antenna and the human body sensor are formed by the conductor pattern thereof, and space-saving for the devices are established. In the flexible circuit board 130 of the fourth embodiment, there are provided the human body sensor 140, a first communication antenna 150 that transmits and receives the radio wave in a first frequency (for example, 1.9 GHz), and a second communication antenna 160 that transmits and receives the radio wave in a second frequency (for example, 700 MHz) lower than the first frequency. That is, in the fourth embodiment, the communication antenna includes the first communication antenna 150 and the second communication antenna 160 to configure a so-called dual antenna.

The human body sensor 140 is formed by two conductor patterns such as a first sensor pattern 141 and a second sensor pattern 142 that are formed on the flexible circuit board 130. The first sensor pattern 141 and the second sensor pattern 142 configuring the human body sensor 140 are substantially formed, that is, a majority thereof is formed on the flat plane section 134 of the flexible circuit board 130. In a plan view of the flexible circuit board 130, the second sensor pattern 142 is formed to surround a periphery of the first sensor pattern 141. In addition, a first human body sensor electrode 143 is formed on one end of the first sensor pattern 141, and a second human body sensor electrode 144 is formed on one end of the second sensor pattern 142.

A specific configuration for the human body sensor 140 is not particularly limited such that a projection-type electrostatic capacitance sensor may be adopted, or other types of contact (approach) sensors may be adopted as well. However, the human body sensor 140 of this embodiment is a so-called surface-type electrostatic capacitance sensor. That is, the human body sensor 140 of this embodiment detects a change in an electric field that is generated when a user approaches or comes into contact with the communication antenna unit 100 (refer to Fig. 13) of the casing 11, thereby detecting the approach or contact of the human body. For further details, a detection circuit and a reference pattern (not illustrated) that are not mounted on the flexible circuit board 130 are provided, for example, on the circuit board 13 (refer to Figs. 3 and 4) accommodated in the casing 11 or on a sub-circuit board (not illustrated). In addition, the first human body sensor electrode 143 and the second human body sensor electrode 144 are respectively connected to the afore-mentioned detection circuit (not illustrated). An electric field between the first sensor pattern 141 and the reference pattern is compared to an electric field between the second sensor pattern 142 and the reference pattern, thereby detecting the approach or contact of the human body by a difference in electric field intensity therebetween or a difference in velocity of which the electric fields change.

Detection is carried out using the three patterns as follows. The second sensor pattern 142 that is provided to surround a majority of a periphery of the first sensor pattern 141 is formed in a hollow ring shape, one end of which is connected to the second human body sensor electrode 144, and the other end of which is disconnected. In contrast, the first sensor pattern 141 is formed in a closed plane. Areas of those two sensor patterns are designed to be the same as each other. However, due to the difference between shapes thereof, a detection velocity of change in the electrostatic capacitance by the second sensor pattern 142 is higher than that of the first sensor pattern 141, and it is known that the detection intensity is also strong. The difference between the detection velocity and the detection intensity depends on types of materials of a substance that approaches the sensor patterns. That is because relative permittivity in the substance differs depending on the types of materials. In general, it is known that if the relative permittivity is high such as in the human body or a metal, the difference between the detection velocity and detection intensity is large, and if the relative permittivity is low such as in paper or plastic, the difference therebetween is small.

The first communication antenna 150 that transmits and receives the radio wave in the first frequency (high frequency) is configured by a first antenna conductor pattern 151 which is formed on the flexible circuit board 130. Similar to the human body sensor 140, the first antenna conductor pattern 151 is substantially formed, that is, a majority thereof is formed on the flat plane section 134 of the flexible circuit board 130 and connected to the human body sensor 140 via a first inductor coil 170. Particularly, the first antenna conductor pattern 151 is connected to the second sensor pattern 142 of the human body sensor 140 via the first inductor coil 170. The first inductor coil 170 may be stored in a recess portion (not illustrated) that is provided on the flat portion 113 (also refer to Figs. 13 and 14) of the support member 110.

The human body sensor 140 is basically configured by the first sensor pattern 141 and the second sensor pattern 142. The human body sensor 140 functions with these two conductor patterns. However, in the fourth embodiment, the first antenna conductor pattern 151 is connected to the second sensor pattern 142 via the first inductor coil 170, thereby denoting that the first antenna conductor pattern 151 functions not only as the first communication antenna 150 which is described above but also as a part of the human body sensor 140. Therefore, the human body sensor 140 is configured by a large conductor pattern including not only the first sensor pattern 141 and the second sensor pattern 142 but also the first antenna conductor pattern 151, thereby being improved in detection performance thereof.

A self-inductance L1 of the first inductor coil 170 is determined in accordance with a self-resonant frequency of the first inductor coil 170. Generally, it is desirable that the self-resonant frequency be selected from sufficiently higher frequency than the frequency used in the first communication antenna 150. However, in the actual design, since there are limits in chip size and the like, there is a case where an inductor coil that has a substantially same self-resonant frequency as the frequency used in the first communication antenna. According to the configuration, as described above, the first antenna conductor pattern 151 functions as a part of the human body sensor 140. However, the second sensor pattern 142 does not function as a communication antenna. That is, the second sensor pattern 142 only functions as the human body sensor. Accordingly, reduction of a communication signal that is transmitted and received using the first antenna conductor pattern 151 being mixed into the human body sensor 140 to exert a negative influence thereon occurs. In place of the first inductor coil 170, it is possible to assemble a substance that can be called a reactance element (first reactance element) or a resonant circuit portion. The reactance element can be in a conductor pattern such as a meandered shape.

The second communication antenna 160 that transmits and receives the radio wave in the second frequency (low frequency) lower than the first frequency is configured by the first antenna conductor pattern 151 and a second antenna conductor pattern 161 which are formed on the flexible circuit board 130. That is, in the fourth embodiment, the second communication antenna 160 is configured by the second antenna conductor pattern 161 that serves to extend an electric circuit length of the first communication antenna 150 in addition to the first communication antenna 150 in its entirety. As a result, the second communication antenna 160 can transmit and receive the radio wave of the second frequency (low frequency) lower than the first frequency, in other words, the radio wave in the second frequency for which a wavelength is longer than the radio wave of the first frequency.

The second antenna conductor pattern 161 is substantially formed on the protrusion section 132 of the flexible circuit board 130, that is, a majority thereof is formed on the protrusion section 132 of the flexible circuit board 130. The protrusion section 132 is inserted through a support slot 114 (refer to Figs. 13 and 14) of the support member 110 and held in a bent state to configure the curved section 133 (also refer to Figs. 13 and 14) such that the second antenna conductor pattern 161 is substantially formed, that is, a majority thereof is formed on the curved section 133 of the flexible circuit board 130. In Fig. 14, a width D1 of the flat plane section 134 of the flexible circuit board 130 is longer than a width D2 of a part that is bent at a position facing the flat plane section 134 among the curved section 133. That is because the flat plane section 134 of the flexible circuit board 130 of the communication antenna unit 100 is disposed on the rear surface 11B side (refer to Figs. 1, 13 and 14) of the casing 11 of the mobile terminal apparatus 10, and the bent part of the curved section 133 is disposed on the front surface 11A side (also refer to Fig. 1). On the front surface 11A side, the display portion 12 (refer to Fig. 1, for example, LCD, organic EL or the like) with a touch panel is disposed. According to a configuration of the communication antenna unit 100 described above, it is reduced that a noise generated by the display portion 12 with a touch panel is mixed from the communication antenna unit 100 to exert a negative influence on a communication. The display portion 12 with a touch panel is attached to the opposite side of the circuit board 13 interposing a metal frame 60 in Figs. 13 and 14. The metal frame 60 is effective in intercepting a noise from the display portion 12. Therefore, an influence of a noise from the display portion 12 on the flat portion 113 of the flexible circuit board 130 of the communication antenna unit 100 that is disposed on the rear surface 11B side of the casing 11 is reduced.

Returning to Fig. 15, in the fourth embodiment, the first antenna conductor pattern 151 and the second antenna conductor pattern 161 are connected to each other by the second inductor coil 180, thereby configuring the second communication antenna 160. According to the configuration, only the first antenna conductor pattern is adopted when transmitting and receiving the radio wave of the first frequency (high frequency). Both the first antenna conductor pattern 151 and the second antenna conductor pattern 161 are adopted when transmitting and receiving the radio wave of the second frequency (low frequency). The second inductor coil 180 may be stored in the recess portion (not illustrated) that is provided on the flat portion 113 (refer to Figs. 13 and 14) of the support member 110.

As described above, the width D1 of the flat plane section 134 of the flexible circuit board 130 is longer than the width D2 of the part that is bent at the position facing the flat plane section 134 among the curved section 133 (refer to Fig. 14). Since only the first antenna conductor pattern 151 is adopted when transmitting and receiving the radio wave of the first frequency (high frequency), a transmission radio wave in the first frequency (high frequency) is radiated only from the flat plane section 134 (also refer to Figs. 13 to 15) of the flexible circuit board 130. In contrast, since both the first antenna conductor pattern 151 and the second antenna conductor pattern 161 are adopted when transmitting and receiving the radio wave of the second frequency (low frequency), a transmission radio wave in the second frequency (low frequency) is radiated from both the flat plane section 134 of the flexible circuit board 130 and the curved section 133 (also refer to Figs. 13 to 15).

Accordingly, a transmission radio wave of the first frequency (high frequency) is not radiated, but is radiated only when transmitting the radio wave of the second frequency (low frequency) from the curved section 133 (refer to Figs. 13 and 14) of the flexible circuit board 130. Then, when transmitting the radio wave of the second frequency (low frequency), the radio wave is radiated not only from the curved section 133 (refer to Figs. 13 and 14) of the flexible circuit board 130 but also from the flat plane section 134 (refer to Figs. 13 to 15), that is, the flat portion 113. Therefore, radiant energy density per unit area of the transmission radio wave is suppressed at a low level. In addition, since there is little plane part in the curved section 133 (refer to Figs. 13 and 14) of the flexible circuit board 130, intensity of the transmission radio wave from this part is low. That is, even though a human body approaches to or comes into contact with the curved section 133 (refer to Figs. 13 and 14) of the flexible circuit board 130, there is no need to lower the intensity of the transmission radio wave. Therefore, the human body sensor 140 to detect a approach of contact of a human body with respect to the second antenna conductor pattern 161 is not provided on the curved section 133 (refer to Figs. 13 and 14), that is, the protruding section 132 of the flexible circuit board 130.

In contrast, when transmitting the radio wave of the first frequency (high frequency), the radio wave is radiated only from the flat plane section 134 of the flexible circuit board 130, that is, the flat portion 113 (refer to Figs. 13 to 15). Therefore, the radiant energy density per unit area of the transmission radio wave cannot be suppressed at a low level. In addition, since there is more of a plane part in the flat plane section 134 (refer to Figs. 13 to 15) of the flexible circuit board 130 than the curved section 133, the intensity of the transmission radio wave therefrom is high. That is, if a human body approaches or comes into contact with the flat plane section 134 of the flexible circuit board 130, there is a need to lower the intensity of the transmission radio wave. Therefore, the human body sensor 140 to detect an approach or contact of a human body with respect to the first antenna conductor pattern 151 is provided on the flat plane section 134 (refer to Figs. 13 to 15) of the flexible circuit board 130. However, the above-described relationship between a shape of the antenna and intensity of the transmission radio wave is the same in a case where one communication antenna pattern is formed over the flat plane section 134 and the curved section 133. Even in that case, the human body sensor 140 can be provided only in the flat plane section 134.

As described above, according to the configuration of the fourth embodiment, there is provided the human body sensor adjacent to the flat plane section of the communication antenna, of which the intensity of the transmission radio wave needs to be lowered when a human body approaches thereto or comes into contact therewith such that it is possible to suppress an influence of a communication electromagnetic wave on a human body while suppressing deterioration in communication quality to a minimum.

A self-inductance L2 of the second inductor coil 180 is not particularly limited. In addition, in order to improve antenna characteristics of the first communication antenna 150 that is adopted when transmitting and receiving a radio wave of the first frequency (high frequency), there is a need to devise a way so as to cause an antenna electric current (electric current contributed for radiation of radio wave) of the first communication antenna 150 not to flow to the second antenna conductor pattern 161 side. In this case, in place of the second inductor coil 180, an LC parallel resonant circuit consisting of a parallel circuit having a coil and a capacitor is adopted, such that it is possible to prevent the electric current of the frequency corresponding to the self-resonant frequency of both of the coil and capacitor from flowing to the second antenna conductor pattern 161 side. That is, a connection between the first antenna conductor pattern 151 and the second antenna conductor pattern 161 may be either the single inductor coil or the LC parallel resonant circuit. That is, in this location, in place of the second inductor coil 180, it is possible to assemble a component that can be called the reactance element or the resonant circuit portion.

The reactance element can be in a conductor pattern such as the meandered shape. In this case, at least either of the first antenna conductor pattern 151 and the second antenna conductor pattern 161 is configured in the meander-shaped conductor pattern, thereby being directly connected to the other. In addition, as in the fourth embodiment, the first antenna conductor pattern 151 and the second antenna conductor pattern 161 may be connected not only in series but also in parallel when viewed from the antenna electrode 152. In this manner, it is not necessary to dispose the first communication antenna 150 adopted when transmitting and receiving the radio wave of the first frequency (high frequency), that is, the first antenna conductor pattern 151 on the flat plane section 134 as in the fourth embodiment, and thus, it is possible to be disposed on the protrusion section 132. In other words, the first antenna conductor pattern 151 can be disposed on the curved section 133 of the fourth embodiment. In this case, the second antenna conductor pattern 161 is disposed on the flat plane section 134 of the fourth embodiment.

Moreover, as described above, the first antenna conductor pattern 151 that functions as the first communication antenna 150 is connected to the second sensor pattern 142 via the first inductor coil 170. As described above, the first antenna conductor pattern 151 that is connected to the sensor pattern 142 is connected to the second antenna conductor pattern 161 via the second inductor coil 180 (the second reactance element). This indicates that not only the first antenna conductor pattern 151 but also the second antenna conductor pattern 161 certainly functions as the above-described second communication antenna 160 and also functions as a part of the human body sensor 140. Therefore, the human body sensor 140 is configured to have a large conductor pattern including not only the first sensor pattern 141 and the second sensor pattern 142 but also the first antenna conductor pattern 151 and the second antenna conductor pattern 161, thereby further improving the detection performance thereof.

For more detail, as similar to the human body sensor 140, the first antenna conductor pattern 151 is substantially formed, that is, a majority part thereof is formed on the flat plane section 134 of the flexible circuit board 130 and is connected to second sensor pattern 142 of the human body sensor 140 via the first inductor coil 170. As described above, it is known that the detection velocity of change in the electrostatic capacitance by the second sensor pattern 142 is higher than that of the first sensor pattern 141 and the detection intensity is also large. The conductor pattern of the communication antenna is connected to the second sensor pattern 142 and is not connected to the first sensor pattern 141 via the first inductor coil 170 (the first reactance element), and thus, it is possible to detect the approach or contact of a human body with respect to the communication antenna fast. In a case where the second antenna conductor pattern and the second sensor pattern are adjacent to each other by changing the patterns of the above-described communication antennas, the patterns may be connected to each other via the first inductor coil (the first reactance element).

According to the fourth embodiment, the second antenna conductor pattern 161 is substantially formed on the curved section 133 of the flexible circuit board 130. The first antenna conductor pattern 151 and the human body sensor 140 are substantially formed on the flat plane section 134 of the flexible circuit board 130 which is adjacent to the curved section 133. The curved section 133 is extended from a surface where the flat plane section 134 exists at different heights (height in a vertical direction of Fig. 14) exhibiting a cross-sectional U shape. In this configuration, without degrading each performance of the dual antenna and the human body sensor, it is possible that the communication antenna unit 100 is designed particularly in a small space in a plane direction, thereby being disposed inside the casing 11.

The communication antenna unit 100 according to the fourth embodiment is disposed inside the casing 11 so as to cause the first communication antenna 150 and the second communication antenna 160 to be disposed at a position closer to the corner portion of the casing 11 than the human body sensor 140 is disposed. That is, an E1 side in Figs. 3 and 4 to 13 becomes a side adjacent to the corner portion of the casing 11, and an E2 side becomes a side close to the center of one edge of the casing 11 away from the corner portion of the casing 11. According to the disposition, the human body sensor 140 can be disposed being closer to the center side being in a frequent contact with a human body than the corner portion of the casing 11, and thus, it is possible to improve the detection sensitivity of the human body sensor 140 with respect to a human body.

In addition, as described above, according to the fourth embodiment, the first antenna conductor pattern 151 that is disposed at the corner portion of the casing 11 functions not only as the first communication antenna 150 but also as a part of the human body sensor 140. Therefore, for example, even if the human body sensor 140 is away from the corner portion of the casing 11, the approach or contact of a human body with respect to the corner portion can be precisely detected.

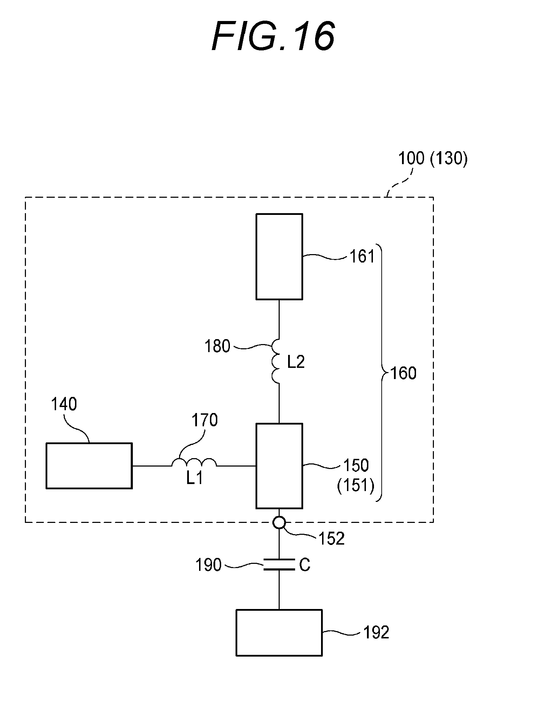

Fig. 16 illustrates a schematic view of an electric circuit of the communication antenna unit 100 according to the fourth embodiment. According to the fourth embodiment, the communication antenna, particularly the first communication antenna 150, is connected to a capacitor 190 via the antenna electrode 152 and further connected to a transmission and reception module 192 that is stored inside the casing 11. Although it is not illustrated in Figs. 3 and 4, the transmission and reception module 192 is, for example, an LTE module and can be disposed on the circuit board 13 of Figs. 3 and 4. In addition, the capacitor 190 can be disposed anywhere between the flexible circuit board 21 and the transmission and reception module 192, for example. The transmission and reception module 192 according to the fourth embodiment may be replaced with a transmission and reception circuit, for example, which is disposed on the circuit board 13 or on different circuit board (not illustrated). Moreover, among the transmission and reception circuits, a part of a matching circuit that is the closest to the capacitor 190 may be disposed at a different place with respect to different transmission and reception circuit. That is, the capacitor 190 and the matching circuit may be disposed on a sub-circuit board (not illustrated) and a different transmission and reception circuit may be disposed on the circuit board 13.

An electrostatic capacity C of the capacitor 190 illustrated in Fig. 16 is not particularly limited from a viewpoint of an antenna matching circuit. The electrostatic capacity C is determined from a viewpoint of securing the performance of the human body sensor 140. A capacitor 190 exclusively allowing the electric current of the frequency that is used in the first communication antenna 150 and the second communication antenna 160 to pass through and exclusively blocking the electric current of the frequency that is used in the human body sensor 140 is selected. A voltage applied to the human body sensor fluctuates in accordance with the change of the electrostatic capacity. The frequency of the electric current generated at the fluctuation of the voltage is extremely low compared to the frequency used in the first communication antenna 150 and the second communication antenna 160. Having such a configuration, since the electric current of the direct-current component is necessary for the human body sensor 140 is secured, the human body sensor 140 functions effectively.

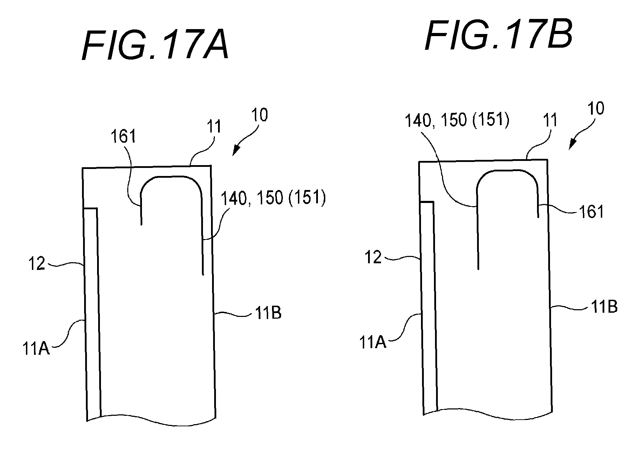

In addition, according to the fourth embodiment, as illustrated in Fig. 17A, the first antenna conductor pattern 151 (the first communication antenna 150) and the human body sensor 140 are disposed at a position closer to the opposite surface of a surface where the display portion 12 of the casing 11 is disposed than the second antenna conductor pattern 161 is disposed. That is, the surface where the display portion 12 is disposed is the front surface 11A, and the first antenna conductor pattern 151 (first communication antenna 150) and the human body sensor 140 are disposed on the rear surface 11B side which is the opposite side thereof.

That is, since the rear surface 11B is frequently exposed to the approach and contact of a user when in use, it is possible to enhance the detection sensitivity by disposing the human body sensor 140 close to the rear surface. Even in a disposition as in Fig. 17B that is a reversed disposition of Fig. 17A, the communication antenna unit 100 of the fourth embodiment performs its function. However, the disposition of Fig. 17A is more preferable than the disposition of Fig. 17B from a viewpoint of improvement of detecting the approach and contact of a human body.

According to the fourth embodiment described above, the dual antenna including two communication antennas is provided on the communication antenna unit 100. However, even if there is provided with a single communication antenna, a configuration may be adopted in which the communication antenna and the human body sensor 140 are formed by the conductor pattern of the single circuit board and the both are connected to each other by the inductor coil. Moreover, the communication antenna may be disposed at a position closer to the corner portion of the casing 11 than the human body sensor 140. Even in this configuration, it is possible to dispose the human body sensor 140 and the communication antenna inside the limited narrow space by the single circuit board without degrading the communication performance or the performance to detect the approach or contact of a human body with respect to the communication antenna, thereby achieving both miniaturization and functional maintenance in the apparatus.

In addition, the flexible circuit board 130 of the communication antenna unit 100 according to the fourth embodiment includes the cross-sectional U-shaped curved section 133, and each of the electric current flowing in the first antenna conductor pattern 151 and the second antenna conductor pattern 161 is in a reverse phase to be counter-balanced with each other in a state of being attached to the casing 11. Therefore, there is a concern that the advantage of the antenna may be degraded. However, according to the fourth embodiment, the curved section is caused to be in a U shape so that a certain interval (for example, approximately 10 mm) between the first antenna conductor pattern 151 and the second antenna conductor pattern 161 can be maintained. Accordingly, the concern of performance degradation in such a dual antenna can be dispelled. Naturally, since there is no need for concern, the range of interval is not particularly limited.

Moreover, in the communication antenna unit 100 according to the fourth embodiment, the so-called matching circuit (the capacitor 190 and the inductor coil that are provided in accordance with necessity) is disposed in the internal portion of the casing 11 to be provided on the circuit board 13 to which the communication antenna unit 100 is connected or on a different circuit board (not illustrated). However, naturally, such a matching circuit is allowed to be mounted on the flexible circuit board 130.

In the fourth embodiment, the second antenna conductor pattern 161 is substantially formed in the curved section 133 of the flexible circuit board 130 that is held in the bent state by the support member 110, and the first antenna conductor pattern 151 and the human body sensor 140 are formed on the flat plane section 134 of the flexible circuit board 130 adjacent to the curved section 133. Meanwhile, the first antenna conductor pattern of the high frequency side can be substantially formed on the curved section 133 of the flexible circuit board 130, and the second antenna conductor pattern of the low frequency side and the human body sensor 140 are formed on the flat plane section 134 of the flexible circuit board 130. Even in this configuration, it is possible to dispose the components by the space-saving design without degrading each performance of the so-called dual antenna and the human body sensor.

In addition, the fourth embodiment is an example in which the communication antenna unit 100 is provided with the first communication antenna 150, the second communication antenna 160 and the human body sensor 140. However, another example can be considered in which the human body sensor 140 is not provided, the second antenna conductor pattern 161 is substantially formed in the curved section 133 of the flexible circuit board 130, and the first antenna conductor pattern 151 is formed in the flat plane section 134 of the flexible circuit board 130. From a viewpoint of increasing communication standards and carrier frequencies, it is possible to achieve a further space-saving design even in this configuration.

Moreover, in the fourth embodiment, the description is given regarding a configuration in which the communication antenna unit 100 includes the flexible circuit board 130 having flexibility and the support member 110 supporting the flexible circuit board 130 in the state of being held in the bent state. However, it is possible to adopt different configurations. That is, according to a technology of forming a metal thin film on a surface of the support member 110, the communication antennas 150 and 160 and the human body sensor 140 are directly formed in the support member 110 without passing through the flexible circuit board 130. In this case, the support member 110 itself becomes the single circuit board having the communication antennas 150 and 160 and the human body sensor 140.

### (Fifth Embodiment)

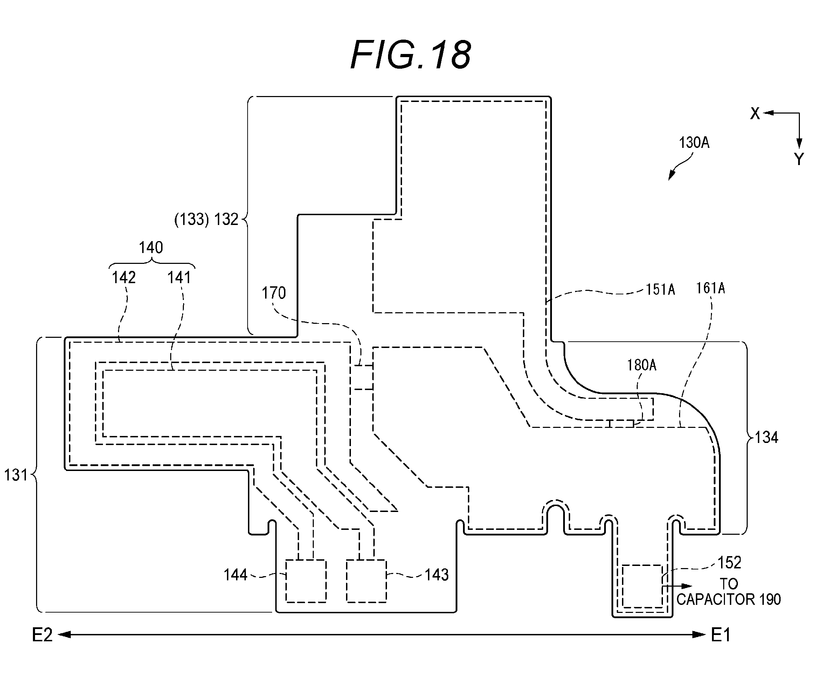

Here, a fifth embodiment will be described with reference to Figs. 13, 14, 16 and 17 as used in the fourth embodiment and with reference to Fig. 18 in place of Fig. 15 used in the fourth embodiment. In a flexible circuit board 130A in Fig. 18 according to the fifth embodiment, contrary to the fourth embodiment, there are provided the human body sensor 140, a first communication antenna that transmits and receives the radio wave in a first frequency (for example, 700 MHz), and a second communication antenna that transmits and receives the radio wave in a second frequency (for example, 1.9 GHz) higher than the first frequency. A first antenna conductor pattern 151A, a second antenna conductor pattern 161A and a second inductor coil 180A configure a so-called dual antenna by which the radio waves in the first frequency and the second frequency can be transmitted and received. The operation of the human body sensor 140 is the same as that of the fourth embodiment, and its description is omitted in description of this embodiment.

In the fifth embodiment, the first antenna conductor pattern 151A and the second antenna conductor pattern 161B are connected via the second inductor coil 180. A second communication antenna that transmits and receives the radio waves in the first frequency (low frequency) or the second frequency (high frequency) is configured by the first antenna conductor pattern 151A, the second antenna conductor pattern 161A and the second inductor coil 180A which are formed on the flexible circuit board 130A. The second antenna conductor pattern 161A is designed to have a resonant frequency being equal to the second frequency (high frequency), and is designed to have a value which is obtained by multiplying (for example, two times) a resonant frequency of a part in which the first antenna conductor pattern 151A and the second inductor coil 180A are combined, being equal to the second frequency (high frequency). In addition, it is designed that the resonant frequency of a part in which the first antenna conductor pattern 151A and the second inductor coil 180A are combined becomes the first frequency (low frequency). Accordingly, a part which contributes the transmission and reception of the radio waves in the first frequency (low frequency) is the first antenna conductor pattern 151A, the second inductor coil 180A and a part of the second conductor pattern 161A which serves as a feeding path. The part of the second conductor pattern 161A indicates an area of a line connecting the antenna electrode 152 and a connection point of the second inductor coil 180A by which the second conductor pattern 161A and the first conductor pattern 151A are connected, and a vicinity area on the second conductor pattern 161A on the both sides. Moreover, a part which contributes the transmission and reception of the radio waves in the second frequency (high frequency) is a whole of the first antenna conductor pattern 151A, the second antenna conductor pattern 161A and the second inductor coil 180A.

Similar to the human body sensor 140, the second antenna conductor pattern 161A is substantially formed, that is, a majority thereof is formed on the flat plane section 134 of the flexible circuit board 130A and connected to the human body sensor 140 via the first inductor coil 170. Particularly, the second antenna conductor pattern 161A is connected to the second sensor pattern 142 of the human body sensor 140 via the first inductor coil 170. The first inductor coil 170 may be stored in a recess portion (not illustrated) that is provided on the flat portion 113 (also refer to Figs. 13 and 14) of the support member 110.

The human body sensor 140 is basically configured by the first sensor pattern 141 and the second sensor pattern 142. The human body sensor 140 functions with these two conductor patterns. However, in the fifth embodiment, the second antenna conductor pattern 161A is connected to the second sensor pattern 142 via the first inductor coil 170, thereby denoting that the second antenna conductor pattern 161A functions not only as the second communication antenna which is described above but also as a part of the human body sensor 140. Therefore, the human body sensor 140 is configured by a large conductor pattern including not only the first sensor pattern 141 and the second sensor pattern 142 but also the second antenna conductor pattern 161A, thereby being improved in detection performance thereof.

A self-inductance L1 of the first inductor coil 170 is determined in accordance with a self-resonant frequency of the first inductor coil 170. Generally, it is desirable that the self-resonant frequency be selected from sufficiently higher frequency than the frequency used in the first communication antenna. However, in the actual design, since there are limits in chip size and the like, there is a case where an inductor coil that has a substantially same self-resonant frequency as the frequency used in the first communication antenna. According to the configuration, as described above, the second antenna conductor pattern 161A functions as a part of the human body sensor 140. However, the second sensor pattern 142 does not function as a communication antenna. That is, the second sensor pattern 142 only functions as the human body sensor. Accordingly, reduction of a communication signal that is transmitted and received using the second antenna conductor pattern 161A being mixed into the human body sensor 140 to exert a negative influence thereon occurs. In place of the first inductor coil 170, it is possible to assemble a substance that can be called a reactance element (first reactance element) or a resonant circuit portion. The reactance element can be in a conductor pattern such as a meandered shape.

The first antenna conductor pattern 151A is substantially formed on the protrusion section 132 of the flexible circuit board 130A, that is, a majority thereof is formed on the protrusion section 132 of the flexible circuit board 130A. The protrusion section 132 is inserted through a support slot 114 (refer to Figs. 13 and 14) of the support member 110 and held in a bent state to configure the curved section 133 (also refer to Figs. 13 and 14) such that the first antenna conductor pattern 151A is substantially formed, that is, a majority thereof is formed on the curved section 133 of the flexible circuit board 130A. In Fig. 14, a width D1 of the flat plane section 134 of the flexible circuit board 130A is longer than a width D2 of a part that is bent at a position facing the flat plane section 134 among the curved section 133. That is because the flat plane section 134 of the flexible circuit board 130A of the communication antenna unit 100 is disposed on the rear surface 11B side (refer to Figs. 1, 13 and 14) of the casing 11 of the mobile terminal apparatus 10, and the bent part of the curved section 133 is disposed on the front surface 11A side (also refer to Fig. 1). On the front surface 11A side, the display portion 12 (refer to Fig. 1, for example, LCD, organic EL or the like) with a touch panel is disposed. According to a configuration of the communication antenna unit 100 described above, it is reduced that a noise generated by the display portion 12 with a touch panel is mixed from the communication antenna unit 100 to exert a negative influence on a communication. The display portion 12 with a touch panel is attached to the opposite side of the circuit board 13 interposing a metal frame 60 in Figs. 13 and 14. The metal frame 60 is effective in intercepting a noise from the display portion 12. Therefore, an influence of a noise from the display portion 12 on the flat portion 113 of the flexible circuit board 130A of the communication antenna unit 100 that is disposed on the rear surface 11B side of the casing 11 is reduced. The second inductor coil 180A may be stored in the recess portion (not illustrated) that is provided on the flat portion 113 (refer to Figs. 13 and 14) of the support member 110.

As described above, the width D1 of the flat plane section 134 of the flexible circuit board 130 is longer than the width D2 of the part that is bent at the position facing the flat plane section 134 among the curved section 133 (refer to Fig. 14). The first antenna conductor pattern 151A and the second inductor coil 180A are mainly adopted and the second antenna conductor pattern 161A functions as feeding line mainly when transmitting and receiving the radio wave of the first frequency (low frequency). Namely, most of the transmission radio waves in the first frequency (low frequency) is radiated from the curved section 133 (also refer to Figs. 13, 14 and 18) of the flexible circuit board 130A. In contrast, both the first antenna conductor pattern 151A and the second antenna conductor pattern 161A are adopted together with the second inductor coil 180A when transmitting and receiving the radio wave of the second frequency (high frequency). Namely, transmission radio waves in the second frequency (high frequency) is radiated from both the flat plane section 134 and the curved section 133 of the flexible circuit board 130A (also refer to Figs. 13, 14 and 18).

Accordingly, a transmission radio wave of the first frequency (low frequency) is radiated with little energy, but is radiated when transmitting the radio wave of the second frequency (high frequency) from the flat plane section 134 (refer to Figs. 13 and 14) of the flexible circuit board 130A. Then, when transmitting the radio wave of the second frequency (high frequency), the radio wave is radiated not only from the curved section 133 (refer to Figs. 13 and 14) of the flexible circuit board 130A but also from the flat plane section 134 (refer to Figs. 13, 14 and 18), that is, the flat portion 113. Therefore, radiant energy density per unit area of the transmission radio wave is suppressed at a low level. In addition, since there is little plane part in the curved section 133 (refer to Figs. 13 and 14) of the flexible circuit board 130A, intensity of the transmission radio wave from this part is low. That is, even though a human body approaches to or comes into contact with the curved section 133 (refer to Figs. 13 and 14) of the flexible circuit board 130A, there is no need to lower the intensity of the transmission radio wave. Therefore, the human body sensor 140 to detect a approach of contact of a human body with respect to the second antenna conductor pattern 161A is not provided on the curved section 133 (refer to Figs. 13 and 14), that is, the protruding section 132 of the flexible circuit board 130A.

In contrast, since there is more of a plane part in the flat plane section 134 (refer to Figs. 13, 14 and 18) of the flexible circuit board 130A than the curved section 133, the intensity of the transmission radio wave therefrom is high. That is, if a human body approaches or comes into contact with the flat plane section 134 of the flexible circuit board 130A, there is a need to lower the intensity of the transmission radio wave. Therefore, the human body sensor 140 to detect an approach or contact of a human body with respect to the first antenna conductor pattern 151A is provided on the flat plane section 134 (refer to Figs. 13, 14 and 18) of the flexible circuit board 130A. However, the above-described relationship between a shape of the antenna and intensity of the transmission radio wave is the same in a case where one communication antenna pattern is formed over the flat plane section 134 and the curved section 133. Even in that case, the human body sensor 140 can be provided only in the flat plane section 134.

### (Sixth Embodiment)

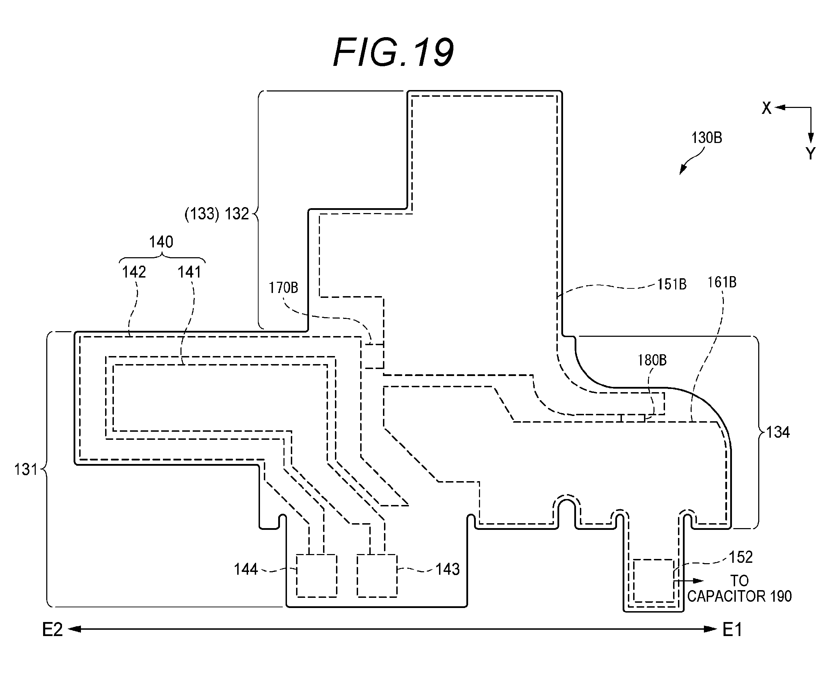

Here, a sixth embodiment will be described with reference to Figs. 13, 14, 16 and 17 as used in the fourth and fifth embodiments and with reference to Fig. 19 in place of Fig. 18 used in the fifth embodiment. In a flexible circuit board 130B in Fig. 19 according to the sixth embodiment, as in the fifth embodiment, there are provided the human body sensor 140, a first communication antenna that transmits and receives the radio wave in a first frequency (for example, 700 MHz), and a second communication antenna that transmits and receives the radio wave in a second frequency (for example, 1.9 GHz) higher than the first frequency. A first antenna conductor pattern 151B, a second antenna conductor pattern 161B and a second inductor coil 180B configure a so-called dual antenna by which the radio waves in the first frequency and the second frequency can be transmitted and received. The operation of the human body sensor 140 is the same as that of the fourth embodiment, and its description is omitted in description of this embodiment.

The sixth embodiment is different from the fifth embodiment that the first antenna conductor pattern 151B is connected to the second sensor pattern 142 via the first inductor coil 170B, thereby denoting that the first antenna conductor pattern 151B functions not only as the first and second communication antennas which are described above but also as a part of the human body sensor 140. Therefore, the human body sensor 140 is configured by a large conductor pattern including not only the first sensor pattern 141 and the second sensor pattern 142 but also the first antenna conductor pattern 151B, thereby being improved in detection performance thereof. The first inductor coil 170B may be stored in the recess portion (not illustrated) that is provided on the flat portion 113 (refer to Figs. 13 and 14) of the support member 110. The other elements are common to those in the fourth and fifth embodiments, and the detailed description is omitted.

### (Seventh Embodiment)

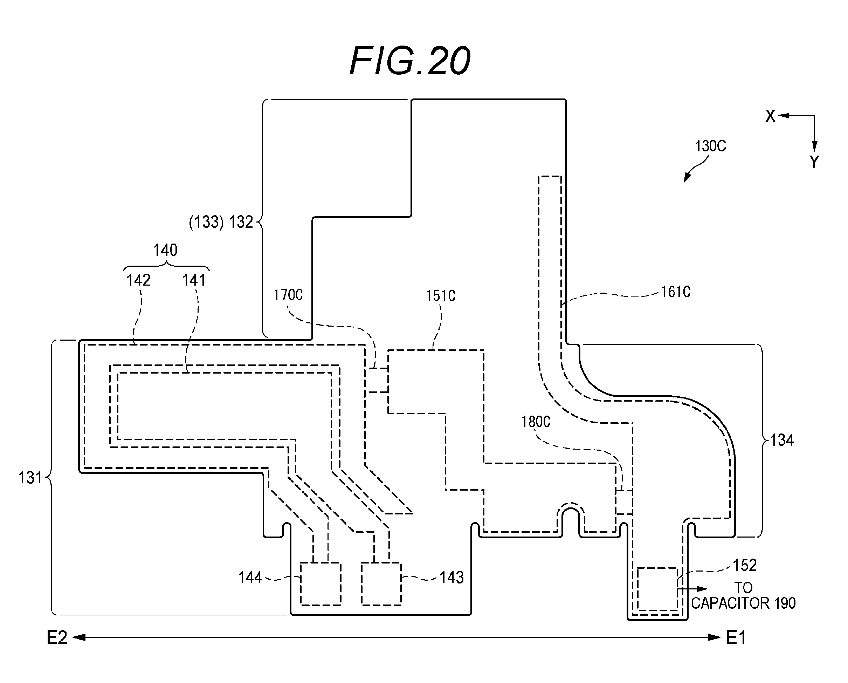

Here, a seventh embodiment will be described with reference to Figs. 13, 14, 16 and 17 as used in the fourth embodiment and with reference to Fig. 20 in place of Fig. 15 used in the fourth embodiment. In a flexible circuit board 130C in Fig. 20 according to the seventh embodiment, contrary to the fourth embodiment, there are provided the human body sensor 140, a first communication antenna that transmits and receives the radio wave in a first frequency (for example, 700 MHz), and a second communication antenna that transmits and receives the radio wave in a second frequency (for example, 1.9 GHz) higher than the first frequency. A first antenna conductor pattern 151C, a second antenna conductor pattern 161C and a second inductor coil 180C configure a so-called dual antenna by which the radio waves in the first frequency and the second frequency can be transmitted and received. The seventh embodiment is different from the fourth and fifth embodiments in that the first antenna conductor pattern 151C is disposed only in the flat plane section 134 of a flexible circuit board 130C, and the second antenna conductor pattern 161C is disposed along the protrusion section 132 and the flat plane section 134 of the flexible circuit board 130C. In addition, the seventh embodiment is different from the fourth embodiment, but similar to the fifth embodiment in that the first antenna conductor pattern 151C is connected to the second sensor pattern 142 via a first inductor coil 170C, thereby denoting that the second antenna conductor pattern 161C functions not only as the first and second communication antennas which are described above but also as a part of the human body sensor 140. Therefore, the human body sensor 140 is configured by a large conductor pattern including not only the first sensor pattern 141 and the second sensor pattern 142 but also the first antenna conductor pattern 151C, thereby being improved in detection performance thereof.

As described above, the width D1 of the flat plane section 134 of the flexible circuit board 130C is longer than the width D2 of the part that is bent at the position facing the flat plane section 134 among the curved section 133 (refer to Fig. 14). The first antenna conductor pattern 151C and the second inductor coil 180C are mainly adopted and the second antenna conductor pattern 161C functions as feeding line mainly when transmitting and receiving the radio wave of the first frequency (low frequency). Namely, most of the transmission radio waves in the first frequency (low frequency) is radiated from the flat plane section 134 (also refer to Figs. 13, 14 and 20) of the flexible circuit board 130C. In contrast, both the first antenna conductor pattern 151C and the second antenna conductor pattern 161C are adopted together with the second inductor coil 180C when transmitting and receiving the radio wave of the second frequency (high frequency). Namely, transmission radio waves in the second frequency (high frequency) is radiated from both the flat plane section 134 and the curved section 133 of the flexible circuit board 130C (also refer to Figs. 13, 14 and 20).

Accordingly, a transmission radio wave of the first frequency (low frequency) is radiated with little energy, but is radiated when transmitting the radio wave of the second frequency (high frequency) from the curved section 133 (refer to Figs. 13 and 14) of the flexible circuit board 130C. Then, when transmitting the radio wave of the second frequency (high frequency), the radio wave is radiated not only from the curved section 133 (refer to Figs. 13 and 14) of the flexible circuit board 130C but also from the flat plane section 134 (refer to Figs. 13, 14 and 20), that is, the flat portion 113. Therefore, radiant energy density per unit area of the transmission radio wave is suppressed at a low level. In addition, since there is little plane part in the curved section 133 (refer to Figs. 13 and 14) of the flexible circuit board 130C, intensity of the transmission radio wave from this part is low. That is, even though a human body approaches to or comes into contact with the curved section 133 (refer to Figs. 13 and 14) of the flexible circuit board 130C, there is no need to lower the intensity of the transmission radio wave. Therefore, the human body sensor 140 to detect a approach of contact of a human body with respect to the second antenna conductor pattern 161C is not provided on the curved section 133 (refer to Figs. 13 and 14), that is, the protruding section 132 of the flexible circuit board 130C.

In contrast, since there is more of a plane part in the flat plane section 134 (refer to Figs. 13, 14 and 20) of the flexible circuit board 130C than the curved section 133, the intensity of the transmission radio wave therefrom is high. That is, if a human body approaches or comes into contact with the flat plane section 134 of the flexible circuit board 130C, there is a need to lower the intensity of the transmission radio wave. Therefore, the human body sensor 140 to detect an approach or contact of a human body with respect to the first antenna conductor pattern 151C is provided on the flat plane section 134 (refer to Figs. 13, 14 and 20) of the flexible circuit board 130C. However, the above-described relationship between a shape of the antenna and intensity of the transmission radio wave is the same in a case where one communication antenna pattern is formed over the flat plane section 134 and the curved section 133. Even in that case, the human body sensor 140 can be provided only in the flat plane section 134. The other elements are common to those in the fourth to sixth embodiments, and the detailed description is omitted.

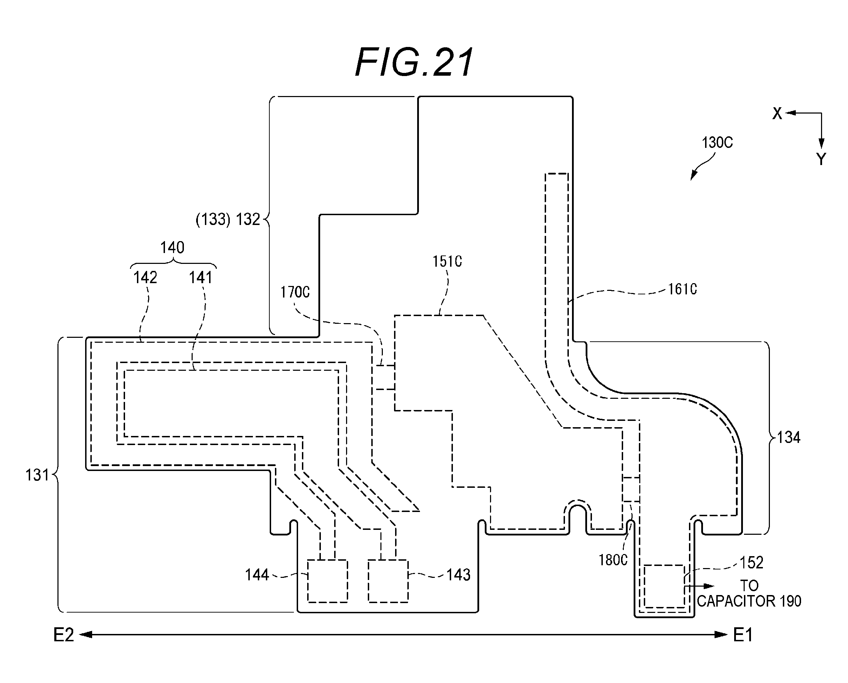

Alternatively, the shape of the first antenna patter 151C may be a wide pattern as illustrated in Fig. 21 instead of a narrow pattern as illustrated in Fig. 20.

The mobile terminal apparatus according to the aspects of the present invention is not limited to the above-described embodiments such that it is possible for the mobile terminal apparatus to be appropriately changed or improved. For example, the shape or configuration of the mobile terminal apparatus, the casing, the display portion, the circuit board, the battery pack, the power reception portion, the power feeding portion, the flexible circuit board, the connector portion, the recess portion, the through hole, the waterproof member, the hole portion, the water stopper, the power reception terminal, the bendable portion and the like which are used in the First Embodiment to the Third Embodiment is not limited to the examples such that it is possible to be appropriately changed. In addition, the present invention is not limited to the Fourth Embodiment such that it is possible to be appropriately changed or improved. In addition, material, shape, size, value, form, numbers, arrangement location and the like of each of configuration elements in the above-described embodiments are arbitrary as long as the present invention can be acquired, thereby not being limited.

According to the present invention, since there is provided a technology for disposing a communication antenna and the human body sensor inside a limited space without degrading a communication performance or a performance of detecting an approach or contact of the human body, it is possible to provide a compact and high-performance mobile terminal apparatus. In addition, the present invention is suitable to be applied to a mobile terminal apparatus in which a circuit board is provided in a casing, a battery pack is accommodated adjacent to the circuit board, and a power feeding portion of the battery pack is connected to a power reception portion inside the casing.

This application is based upon and claims the benefit of priorities of Japanese Patent Applications Nos. 2012-276226 and 2012-276227, both filed on December 18, 2012, the contents of which are incorporated herein by reference in its entirety.

### It follows a list of further embodiments of the invention:

Embodiment 1: A communication antenna unit comprising:
   a communication antenna formed of a conductor pattern;
   a human body sensor formed of another conductor pattern separately from the communication antenna; and
   a single unit board on which the communication antenna and the human body sensor are formed.
Embodiment 2: The communication antenna unit with the features of embodiment 1, further comprising:
   a first reactance element which connects the communication antenna to the human body sensor.
Embodiment 3: The communication antenna unit with the features of embodiment 2, wherein
   the communication antenna further includes:
   a first communication antenna that is configured by a first antenna conductor pattern formed on the unit board and adapted to transmit or receive a radio wave in a first frequency; and
   a second communication antenna that is configured by the first antenna conductor pattern and a second antenna conductor pattern that is formed adjacent to the first antenna conductor pattern on the circuit board and configured to transmit or receive a radio wave in a second frequency, wherein the first reactance element connects the first antenna conductor pattern to the human body sensor.
Embodiment 4: The communication antenna unit with the features of embodiment 1, further comprising:
   a flat plane section; and
   a curved section formed adjacent to the flat plane section, wherein the communication antenna is formed in the flat plane section and the curved section, and
   the human body sensor is formed in the flat plane section.
Embodiment 5: The communication antenna unit with the features of embodiment 4, wherein
   the communication antenna further includes:
   a first communication antenna that is configured by a first antenna conductor pattern formed on the unit board and adapted to transmit or receive a radio wave in a first frequency; and
   a second communication antenna that is configured by the first antenna conductor pattern and a second antenna conductor pattern that is formed adjacent to the first antenna conductor pattern on the circuit board and configured to transmit or receive a radio wave in a second frequency, wherein the first reactance element connects the first antenna conductor pattern to the human body sensor, and
   one of the first and second communication antenna conductor patterns is at least partly formed in the curved section, and
   the other of the first and second communication antenna conductor patterns and the human body are formed in the flat plane section.
Embodiment 6: A mobile terminal apparatus comprising:
   a casing; and
   a communication antenna unit with the features of embodiment 1.
Embodiment 7: The mobile terminal apparatus with the features of embodiment 6, further comprising:
   a display portion including a display surface on the casing, wherein
   a flat plane section of the communication antenna unit is arranged closer to a surface opposite to the display surface than to the display surface.
Embodiment 8: The mobile terminal apparatus with the features of embodiment 6, further comprising:
   a first reactance element which connects the communication antenna to the human body sensor; and
   a capacitor which connects the communication antenna to a transmission and reception circuit accommodated in the casing.
Embodiment 9: The mobile terminal apparatus with the features of embodiment 6, wherein
   the communication antenna is disposed at a position closer to a corner of the casing than the human body sensor is disposed.
Embodiment 10: The mobile terminal apparatus with the features of embodiment 9, further comprising:
   a first reactance element which connects the communication antenna to the human body sensor; and
   a capacitor which connects the communication antenna to a transmission and reception circuit accommodated in the casing.
Embodiment 11: The mobile terminal apparatus with the features of embodiment 6, further comprising:
   a battery pack that is accommodated in the casing, wherein
   the human body sensor and the communication antenna are disposed on a corner portion at a side far from the battery pack in the casing.
Embodiment 12: The mobile terminal apparatus with the features of embodiment 11, further comprising:
   a circuit board that is accommodated in the casing;
   a power reception portion that is held in the casing;
   a power feeding portion that is provided in the battery pack and connected to the power reception portion;
   a plurality of terminal plates, each having one end to be held on one surface which is included in the power reception portion, and having two widest surfaces which are parallel to each other, one of which facing and being parallel to one of two widest surfaces of an adjacent terminal plate, wherein the plurality of terminal plates are aligned along a direction orthogonal to those two widest surfaces;
   a flexible circuit board that includes a flexible bendable portion provided along the direction in which the plurality of terminal plates are aligned and connects the circuit board to the power reception portion.
Embodiment 13: The mobile terminal apparatus with the features of embodiment 12, wherein
   a U-shaped portion is provided between the power reception portion and the bendable portion of the flexible board, and
   the U-shaped portion has a U shape when viewed from a direction orthogonal to a wiring surface of the flexible board and protrudes toward an opposite side of the power reception portion with respect to the bendable portion in a direction parallel to the wiring surface of the flexible circuit board and the two widest surfaces of the plurality of terminal plates.
Embodiment 14: The mobile terminal apparatus with the features of embodiment 12, wherein:
   the casing includes an accommodation portion which the battery pack is attachable to and detachable from;
   the battery pack that is attachable to and detachable from the accommodation pack and includes a first waterproof member, and a plurality of terminal plates included in the power reception portion are disposed in an inner side of the accommodation portion than the first waterproof member of the battery pack in a state where the battery pack is accommodated in the accommodation portion.
Embodiment 15: The mobile terminal apparatus with the features of embodiment 12, further comprising:
   a recess portion that is provided outside the accommodation portion for the battery pack in the casing;
   a lid portion that closes the recess portion; and
   a hole portion that is provided on a bottom surface of the recess portion, and is covered with a water stopper which disallows a liquid passing through from an external portion into an internal portion of the casing, and allows air to pass through between the external portion and the internal portion of the casing.
Embodiment 16: The mobile terminal apparatus with the features of embodiment 15, further comprising:
   a through hole that is provided on the bottom surface of the recess portion and allows an access from the external portion of the casing to the circuit board; and
   a frame-shaped second waterproof member that surrounds the through hole and is disposed between the bottom surface of the recess portion and a rear surface of the lid portion to be in close contact therewith, wherein the hole portion is provided outside the second waterproof member in the bottom surface of the recess portion.

## Claims

1. The mobile terminal apparatus (10) comprising:
a casing (11) that includes an accommodation portion (38) which the battery pack (14) is attachable to and detachable from;
a battery pack (14) that is accommodated in the casing (11),
a circuit board (13) that is accommodated in the casing (11);
a power reception portion (16) that is held in the casing (11);
a power feeding portion (18) that is provided in the battery pack (14) and connected to the power reception portion (16);
a plurality of terminal plates (44), each having one end to be held on one surface which is included in the power reception portion (16), and having two widest surfaces which are parallel to each other, one of which facing and being parallel to one of two widest surfaces of an adjacent terminal plate (44), wherein the plurality of terminal plates are aligned along a direction orthogonal to those two widest surfaces;
a flexible circuit board (21) that includes a flexible bendable portion (48) provided along the direction in which the plurality of terminal plates (44) are aligned and connects the circuit board to the power reception portion (18).

2. The mobile terminal apparatus (10) according to claim 1, wherein
a U-shaped portion (47) is provided between the power reception portion (18) and the bendable portion of the flexible board (21), and
the U-shaped portion has a U shape when viewed from a direction orthogonal to a wiring surface of the flexible board and protrudes toward an opposite side of the power reception portion (18) with respect to the bendable portion in a direction parallel to the wiring surface of the flexible circuit board and the two widest surfaces of the plurality of terminal plates (44).

3. The mobile terminal apparatus (10) according to claim 1, wherein:
the casing (11) includes an accommodation portion (38) which the battery pack (14) is attachable to and detachable from;
the battery pack (14) that is attachable to and detachable from the accommodation pack and includes a first waterproof member, and
a plurality of terminal plates (44) included in the power reception portion (18) are disposed in an inner side of the accommodation portion (38) than the first waterproof member of the battery pack (14) in a state where the battery pack (14) is accommodated in the accommodation portion (38).

4. The mobile terminal apparatus (10) according to claim 1, further comprising:
a recess portion (25) that is provided outside the accommodation portion (38) for the battery pack (14) in the casing (11);
a lid portion (27) that closes the recess portion (25); and
a hole portion (31) that is provided on a bottom surface of the recess portion (25), and is covered with a water stopper which disallows a liquid passing through from an external portion into an internal portion of the casing (11), and allows air to pass through between the external portion and the internal portion of the casing.

5. The mobile terminal apparatus (10) according to claim 4, further comprising:
a through hole that is provided on the bottom surface of the recess portion (25) and allows an access from the external portion of the casing (11) to the circuit board; and
a frame-shaped second waterproof member that surrounds the through hole and is disposed between the bottom surface of the recess portion and a rear surface of the lid portion to be in close contact therewith, wherein
the hole portion (31) is provided outside the second waterproof member in the bottom surface of the recess portion (25).
